# EUROPÄISCHE PATENTSCHRIFT

(11) **EP 3 047 920 B1**
(45) Veröffentlichungstag und Bekanntmachung des Hinweises auf die Patenterteilung: **15.11.2017**
(21) Anmeldenummer: 15153283.5
(22) Anmeldetag: 30.01.2015
(51) Int. Cl.: C03B 35/18, F27D 99/00, F27B 9/24, F27B 9/30, C03B 35/16, F27D 3/02

(54) **Tragrollenlagerungssystem einer Tragrolle eines Rollenherdofens, Tragrollenhandhabungsvorrichtung zum Tragrollenwechsel und Verfahren zum Tragrollenwechsel**
Support roller bearing system of a support roller of a roller hearth furnace, support roller handling device for exchanging support roller and method for exchanging support roller
Système de stockage de rouleau porteur d'un rouleau porteur d'un four à sol à rouleaux, dispositif de manipulation de rouleau porteur destiné au changement de rouleau porteur et procédé de changement de rouleau porteur

(30) Priorität: 20.01.2015 EP 15151782; 21.01.2015 EP 15151976; 22.01.2015 EP 15152140
(43) Veröffentlichungstag der Anmeldung: 27.07.2016
(73) Patentinhaber: LOI Thermprocess GmbH, 45141 Essen (DE)
(72) Erfinder: Balster, Frank, 48301 Nottuln (DE); Wachholder, Horst, 45277 Essen (DE)
(74) Vertreter: Zenz Patentanwälte Partnerschaft mbB

(56) Entgegenhaltungen:
- DE-A1-102011 079 771
- FR-A1- 2 742 854
- JP-A- 2003 156 287

## Beschreibung

Die Erfindung richtet sich auf ein Tragrollenlagerungssystem einer Tragrolle eines Rollenherdofens, aufweisend ein erstes Lagerelement, welches auf einer ersten Seitenwand des Rollenherdofens anbringbar ist, ein zweites Lagerelement, welches auf einer der ersten Seitenwand gegenüberliegenden, zweiten Seitenwand anbringbar ist, eine Tragrolle, die mit ihrem ersten Längsende mittels des ersten Lagerelements und mit ihrem zweiten Längsende mittels des zweiten Lagerelements drehbar im Rollenherdofen lagerbar ist, wobei sich von dem ersten Längsende der Tragrolle aus ein Wellenzapfen erstreckt, der aus dem ersten Lagerelement nach außen hin hervorsteht und mit einer Antriebseinheit antriebsverbindbar ist.

Ferner richtet sich die Erfindung auf eine Tragrollenhandhabungsvorrichtung zum Wechsel einer mit einem Tragrollenlagerungssystem gelagerten Tragrolle eines Rollenherdofens, aufweisend einen Basisträger, einen an dem Basisträger angebrachten Schwenkträger und ein erstes Rollenhandhabungselement, welches an dem Schwenkträger angebracht ist und eine Tragrolle anheben kann.

Schließlich richtet sich die Erfindung auf ein Verfahren zum Austausch von Tragrollen eines Rollenherdofens, der ein Tragrollenlagerungssystem aufweist, mit Hilfe einer Tragrollenhandhabungsvorrichtung, wobei die Tragrollenhandhabungsvorrichtung seitlich neben dem Rollenherdofen an die Position der zu demontierenden Tragrolle gefahren wird, der Wellenzapfen der zu demontierenden Tragrolle von einer Antriebseinheit entkoppelt wird, dann die Tragrollenhandhabungsvorrichtung an die zu demontierende Tragrolle herangefahren wird und dann eine Befestigung des ersten Lagerelements vom Rollenherdofen gelöst wird.

Ein Tragrollenlagerungssystem der Eingangs bezeichneten Art ist zum Beispiel aus der DE 10 2011 079 771 A1 bekannt, wobei dieser Anmeldung auch eine Tragrollenhandhabungsvorrichtung sowie das Verfahren der Eingangs bezeichneten Art zu entnehmen ist.

Rollenherdöfen, die auch als Durchlauföfen bezeichnet werden und zum Beispiel in Bandglüh- bzw. Homogenisierungsanlagen eingesetzt werden, verwenden eine Vielzahl von Tragrollen, die das mit Wärme zu behandelnde Stückgut durch den Rollenherdofen transportieren. Bei der Wärmebehandlung von Stahlwerkstoffen im Temperaturbereich oberhalb von etwa 800°C neigen die Oberflächen der Tragrollen zur Bildung von unregelmäßigen, festen, nur schwer entfernbaren Belägen. Dabei wächst mit zunehmender Dicke der Beläge auf den Oberflächen der Tragrollen die Gefahr, dass sich die Unregelmäßigkeiten in den Stahlwerkstoff eindrücken und im Stückgut unerwünschte Muster hinterlassen, was insbesondere im nachfolgenden Verarbeitungsprozess zu Produktfehlern führen kann. Die Betreiber derartiger Anlagen mit Rollenherdöfen sind deshalb dazu gezwungen, den Ofenbetrieb zur Durchführung aufwendiger Reinigungsmaßnahmen immer wieder für längere Zeit zu unterbrechen. Aber auch ein Defekt einer Tragrolle führte bislang dazu, dass der gesamte Ofen abgeschaltet und abgekühlt werden musste, um die defekte Tragrolle durch eine neue Tragrolle zu ersetzen. Ein solcher Tragrollenwechsel kann beispielsweise ein oder mehrere Tage dauern, was einen erheblichen Produktionsausfall nach sich zieht.

Die DE 10 2011 079 771 A1 liefert keine konstruktiven Hinweise darauf, wie ein Tragrollenwechsel möglichst effizient zu realisieren ist, sondern vielmehr ein Konzept, wonach ein Tragrollenwechsel von einer seitlich neben dem Rollenherdofen verfahrbaren Tragrollenhandhabungsvorrichtung durchgeführt wird und eine Lanze der Tragrollenhandhabungsvorrichtung in die hohle Tragrolle einfährt und die auszutauschende Tragrolle anhebt und aus dem Ofen zieht. Solche Konzepte, den Tragrollenwechsel mit Hilfe besonders ausgebildeter Vorrichtungen durchzuführen, die seitlich neben dem Rollenherdofen angeordnet sind, sind aber aus dem Stand der Technik bekannt. Beispielsweise beschreibt die Druckschrift DE 40 41 217 A1 einen Durchlaufofen, bei dem die angetriebenen Tragrollen aus fluidgekühlten Kernrohren und auf den Kernrohren vorgesehenen Wärmedämmanordnungen bestehen. Bei diesem Durchlaufofen werden nur die Wärmedämmanordnungen gewechselt. Die Kernrohre verbleiben beim Wechsel im Ofeninneren. Eine Herauszieh- und Einschiebevorrichtung zieht dabei eine auszutauschende Wärmedämmanordnung seitlich aus dem Ofen heraus und schiebt anschließend eine neue Wärmedämmanordnung über das nach wie vor im Ofen angeordnete Kernrohr in den Ofen ein. In beiden Fällen ist der Austausch einer Tragrolle jedoch mit nicht unerheblichen Betriebsunterbrechungen und folglich mit Produktionseinbußen verbunden.

Aus der JP 2003 156287 A ist ein Durchlaufherdofen mit Rollen bekannt. Die Rollen sind in der Ofenwandung gelagert, wobei eine axiale Bewegung der Rollen mit Hilfe eines jeweiligen Bolzens verhindert wird. Die Bolzen sind kappenförmig ausgebildet und werden über eine Bajonett-Verbindung auf der Außenseite des Durchlaufherdofens befestigt. Dabei stülpt sich ein jeweiliger, kappenförmig ausgebildeter Bolzen über ein entsprechendes Rollenende. Ein innerhalb des kappenförmigen Bolzens angeordneter Federmechanismus drängt dabei das Rollenende in Position und verhindert ein Herausgleiten der Rolle aus dem Ofen.

Schließlich offenbart die FR 2 742 854 A1 einen Rollenherdofen, dessen Rollen durch eine in der Ofenwandung ausgebildete Durchgangsöffnung ragen. Die Rollen werden durch außerhalb des Rollenherdofens angeordnete Antriebe angetrieben. Zur Abdichtung des Ofens ragen die Rollen durch jeweilige Stopfen hindurch, welche in den zugeordneten Durchgangsöffnungen in der Ofenwandung eingepasst sind. Eine jeweilige Rolle weist zwei Rollenabschnitte auf, wobei einer der beiden Abschnitte außerhalb des Rollenherdofens über zwei Lagerstellen gelagert ist.

Der Erfindung liegt die Aufgabe zugrunde eine Lösung zu schaffen, die auf konstruktiv einfache Weise ein Tragrollenlagerungssystem und eine damit zusammenwirkendende Tragrollenhandhabungsvorrichtung sowie ein Verfahren zum Austausch von Tragrollen des Tragrollenlagerungssystems mit der Tragrollenhandhabungsvorrichtung bereitstellt, wodurch der Aufwand der Wartung und des Austausches von Tragrollen vermindert werden kann und Betriebsunterbrechungen des Rollenherdofens auf ein Minimum reduziert werden können.

Bei einem Tragrollenlagerungssystem der Eingangs bezeichneten Art wird die Aufgabe erfindungsgemäß dadurch gelöst, dass das erste Lagerelement ein Festlager aufweist und dass das zweite Lagerelement ein Loslager aufweist, wobei das erste Lagerelement wenigstens ein zur Handhabung der Tragrolle dienendes Handhabungselement aufweist, welches zum Wechsel einer Tragrolle mit einer Tragrollenhandhabungsvorrichtung mechanisch koppelbar und formschlüssig verbindbar ist, um die Tragrolle mitsamt des ersten Lagerelements aus dem Rollenherdofen herauszuziehen oder um die Tragrolle mitsamt des ersten Lagerelements in den Rollenherdofen einzubringen.

Ferner wird bei einer Tragrollenhandhabungsvorrichtung der Eingangs bezeichneten Art die Aufgabe erfindungsgemäß dadurch gelöst, dass der Schwenkträger um einen ortsfesten Drehpunkt relativ zum Basisträger schwenkbar an dem Basisträger angebracht ist, wobei an dem Basisträger ein zur Handhabung einer Tragrolle dienendes zweites Rollenhandhabungselement angebracht ist, welches zwischen einer Handhabungsposition, in welcher das zweite Rollenhandhabungselement zum Tragrollenwechsel mit der Tragrolle mechanisch koppelbar und formschlüssig verbindbar ist, und einer Freigabeposition, in welcher die mechanische Kopplung und formschlüssige Verbindung zwischen Tragrolle und dem zweiten Rollenhandhabungselement freigegeben ist, verstellbar ausgebildet ist.

Schließlich wird bei einem Verfahren der Eingangs bezeichneten Art die Aufgabe erfindungsgemäß dadurch gelöst, dass zwischen dem zweiten Rollenhandhabungselement und dem wenigstens einen Handhabungselement des ersten Lagerelements der zu demontierenden Tragrolle eine formschlüssige Verbindung hergestellt wird und die Tragrollenhandhabungsvorrichtung anschließend von dem Rollenherdofen weg bewegt wird, so dass dadurch die zu demontierende Tragrolle aus dem Rollenherdofen herausgezogen wird.

Vorteilhafte und zweckmäßige Ausgestaltungen und Weiterbildungen der Erfindung ergeben sich aus den Unteransprüchen.

Durch die Erfindung wird es möglich, dass Tragrollen eines Rollenherdofens in vergleichsweise kurzer Zeit und mit einfachen Mitteln aus dem Rollenherdofen entfernt und durch neue Tragrollen ersetzt werden können. Die zu demontierende Tragrolle und die anschließend zu montierende Tragrolle werden unter anderem an ihrem jeweiligen Handhabungselement sicher von dem ersten Rollenhandhabungselement und dem zweiten Rollenhandhabungselement gehalten, wobei die formschlüssige Verbindung ein Abgleiten der Tragrolle, wie es bei der im Stand der Technik zum Austausch vorgesehenen Lanze der Fall ist, beim Transport der Tragrolle auf sichere Weise verhindert. Die formschlüssige Verbindung sorgt darüber hinaus dafür, dass die Bewegungsführung der Tragrolle und die Lastaufnahme dieser Tragrolle allein von der Tragrollenhandhabungsvorrichtung bewirkt werden. Das erfindungsgemäße Tragrollenlagerungssystem und die erfindungsgemäße Tragrollenhandhabungsvorrichtung entsprechen in Beziehung stehenden Erzeugnissen, weil das Handhabungselement einer Tragrolle des Tragrollenlagerungssystems mit dem zweiten Rollenhandhabungselement der Tragrollenhandhabungsvorrichtung bei Demontage und Montage zusammenwirkt.

Für eine konstruktiv besonders günstige Möglichkeit, die der formschlüssigen Verbindung von Tragrollenhandhabungsvorrichtung und Tragrolle dient, sieht die Erfindung in Ausgestaltung des Tragrollenlagerungssystems vor, dass das wenigstens eine Handhabungselement außenseitig an dem ersten Lagerelement angeformte zapfenförmige Koppelelemente umfasst. Bei zwei Koppelelementen sind diese diametral zueinander angeordnet. Denkbar ist es auch, dass mehr als zwei Koppelelemente oder auch nur ein einziges Koppelelement außenseitig an dem ersten Lagerelement vorgesehen sein können bzw. kann. Vorzugsweise sind bei geradzahliger Anzahl von Koppelelementen die Paare davon diametral zueinander angeordnet. In Ausgestaltung des Tragrollenlagerungssystems sieht die Erfindung dann weiter vor, dass die zapfenförmigen Koppelelemente sich seitlich von dem ersten Lagerelement aus im Wesentlichen parallel zur Wandung des Rollenherdofens und waagerecht erstrecken. Die Koppelelemente bilden zum einen eine formschlüssige Verbindung mit der Tragrollenhandhabungsvorrichtung, so dass diese die Tragrolle mit Hilfe der formschlüssigen Verbindung aus dem Rollenherdofen ziehen kann. Die Koppelelemente bilden zum anderen aber auch eine Schwenkachse, um welche die Tragrolle mit Hilfe des ersten Rollenhandhabungselements schwenkbar ist, was insgesamt ein Anheben und Absenken der Tragrolle ermöglicht.

Bei der Wärmebehandlung der Werkstücke innerhalb des Rollenherdofens kann der Prozess unter einer Schutzgasatmosphäre durchgeführt werden. Um im Betrieb des Rollenherdofens zu verhindern, dass Luft in das Ofeninnere eindringt oder Schutzgas aus dem Ofen entweicht, sieht die Erfindung in Ausgestaltung des Tragrollenlagerungssystems vor, dass sich die Tragrolle durch jeweilige Dichtstopfen hindurch erstreckt, die jeweils in einer jeweiligen Durchtrittsöffnung einer zugeordneten Seitenwand des Rollenherdofens angeordnet sind. Die Dichtstopfen sorgen mit den an ihnen angebrachten Flanschverbindungen für die notwendige Dichtheit.

Zur Erhöhung der Dichtwirkung und zur Erzielung einer Verklemmung der Dichtstopfen in den zugeordneten Durchtrittsöffnungen des Rollenherdofens ist es von besonderem Vorteil, wenn ein jeweiliger Dichtstopfen mit konischen Durchtrittsöffnungen ausgebildet ist und die Tragrolle konische Abschnitte aufweist, durch welche sich der Querschnitt der Tragrolle zu den jeweiligen Längsenden hin verjüngt, wobei die konischen Abschnitte wenigstens abschnittsweise in den zugeordneten Dichtstopfen angeordnet sind. Primär dient die konische Ausbildung dazu, dass die Hitzestrahlung aus dem Inneren des Rollenherdofens nicht direkt auf das außen angebrachte Lagerelement strahlt.

Um ein Verkanten der zu demontierenden oder zu montierenden Tragrolle zu vermeiden, sieht die Erfindung in weiterer Ausgestaltung des Tragrollenlagerungssystems vor, dass das zweite Lagerelement ein Sichtfenster zur visuellen Überwachung eines Tragrollenwechsels aufweist. Durch das Sichtfenster kann überwacht werden, ob die zu demontierende Tragrolle von dem zweiten Lagerelement gelöst ist oder ob die zu montierende Tragrolle in das zweite Lagerelement eingebracht ist oder ob die zu montierende oder zu demontierende Tragrolle im Wesentlichen waagerecht aus oder in den Ofen bewegt wird.

Die Kontrolle durch das Sichtfenster am zweiten Lagerelement kann von einer Person erfolgen, die sich dazu am Sichtfenster aufhalten muss. Wesentlich effizienter kann in Ausgestaltung des Tragrollenlagerungssystems eine Kontrolle dadurch erfolgen, indem an dem Sichtfenster des zweiten Lagerelements eine Überwachungskamera zur visuellen Überwachung eines Tragrollenwechsels demontierbar angebracht ist.

In weiterer Ausgestaltung des Tragrollenlagerungssystems sieht die Erfindung vor, dass das zweite Lagerelement eine drehbar gelagerte Lagerhülse aufweist, die mit dem zweiten Längsende der Tragrolle über eine drehfeste Verbindung, die lösbar ausgebildet ist, verbunden ist.

Um die drehfeste Verbindung am zweiten Lagerelement lösen zu können, ohne dass dazu ein Eingriff oder ein Aufschrauben bzw. Lösen des zweiten Lagerelements durch Personal erforderlich ist, ist es in Ausgestaltung des Tragrollenlagerungssystems von Vorteil, wenn die drehfeste Verbindung von Lagerhülse und zweitem Längsende der Tragrolle wenigstens ein federndes Druckstück, das an der Lagerhülse befestigt ist, und zumindest eine in dem zweiten Längsende der Tragrolle ausgeformte Nut umfasst, wobei zur Ausbildung der drehfesten Verbindung das wenigstens eine federnde Druckstück in die zumindest eine Nut einrastet.

Die Tragrollenhandhabungsvorrichtung dient nicht nur dazu, eine zu demontierende Tragrolle aus dem Ofen zu ziehen oder eine zu montierende Tragrolle in den Ofen einzuschieben. Vielmehr kann mit Hilfe der Tragrollenhandhabungsvorrichtung bei der Demontage und Montage die Tragrolle angehoben oder abgesenkt werden, um die zu montierende Tragrolle passgenau in die Lagerung am zweiten Lagerelement einzuführen oder um ein Verkanten der Tragrolle beim Bewegen in den oder aus dem Ofen zu verhindern. Dementsprechend umfasst die Funktionsweise der Tragrollenhandhabungsvorrichtung die Aspekte, dass die Bewegung der Tragrolle bei deren Montage bzw. Demontage allein von der Tragrollenhandhabungsvorrichtung geführt ist und dass die gesamte Last der zu wechselnden Tragrolle allein von der Tragrollenhandhabungsvorrichtung aufgenommen ist. Die Erfindung sieht daher in Ausgestaltung vor, dass das zweite Rollenhandhabungselement als ein an einem ersten Lagerelement einer handzuhabende Tragrolle anordenbarer Drehpunkt für die handzuhabende Tragrolle ausgebildet ist und dass das erste Rollenhandhabungselement als ein auf die handzuhabende Tragrolle drückender und dadurch die handzuhabende Tragrolle um den von dem zweiten Rollenhandhabungselement ausgebildeten Drehpunkt verschwenkender Niederhalter ausgebildet ist.

Konstruktiv besonders günstig kann eine Ausgestaltung des Niederhalters derart realisiert werden, dass das erste Rollenhandhabungselement wenigstens zwei Andrückrollen umfasst, durch die bei Handhabung einer Tragrolle eines der beiden Längsenden der handzuhabenden Tragrolle niederdrückbar oder niederhaltbar ist. Das erste Längsende der Tragrolle stützt sich folglich an den Andrückrollen ab. Dadurch wird dann, wenn die Tragrolle nicht in dem zweiten Lagerelement gelagert ist, ein Verkippen der Tragrolle verhindert. Vielmehr ermöglichen die Andrückrollen es, dass die Tragrolle sowohl bei Demontage als auch bei Montage im Wesentlichen waagerecht aus dem oder in den Ofen geführt ist.

Bei einem Austausch einer Tragrolle aus dem Rollenherdofen werden die anderen im Ofen befindlichen Tragrollen nicht mehr weiter kontinuierlich angetrieben. Um ein Verbacken der Tragrollen mit dem mit Wärme zu behandelnden Gut zu verhindern, werden die Tragrollen in regelmäßigen Zeitintervallen kurzzeitig angetrieben bzw. rotiert, was aber bei der zu demontierenden Rolle nicht möglich ist, da die Antriebsverbindung an dem ersten Längsende dieser Tragrolle gelöst ist. Um die zu demontierende Tragrolle dennoch bis zu ihrem Austausch drehen zu können, sieht die Erfindung in weiterer Ausgestaltung der erfindungsgemäßen Tragrollenhandhabungsvorrichtung vor, dass wenigstens eine der beiden Andrückrollen eine angetriebene Treibrolle ist. Zu diesem Zweck kann die Tragrollenhandhabungsvorrichtung mit einem zusätzlichen Antrieb versehen sein, welcher die Treibrolle antreibt.

Um die Tragrolle anzuheben oder abzusenken oder zu verkippen, sieht die Erfindung in Ausgestaltung vor, dass eine Höhenverstellvorrichtung, durch die der Schwenkträger um den ortsfesten Drehpunkt verschwenkbar ist, den Schwenkträger an dem Basisträger abstützt. Als Höhenverstellvorrichtung kommt zum Beispiel ein Spindelhubgetriebe in Betracht, welches den Schwenkträger an einer vom Drehpunkt entfernten Position abstützt und absenken bzw. anheben kann, wodurch der Schwenkträger dann um den Drehpunkt schwenkt, was zur Folge hat, dass die Andrückrollen für ein Verschwenken der Tragrolle um das erste Lagerelement, welches an dem Drehpunkt gelagert ist, sorgen.

Eine konstruktiv einfache Möglichkeit sieht die Erfindung in weiterer Ausgestaltung dadurch vor, dass das zweite Rollenhandhabungselement wenigstens ein U-förmiges Arretierelement aufweist, welches in der Handhabungsposition mit einem zapfenförmigen Koppelelement einer Tragrolle formschlüssig verbindbar ausgebildet ist.

Besonders günstig ist es in diesem Zusammenhang, wenn ein Drehmechanismus, den ein Verstellantrieb antreibt, das zweite Rollenhandhabungselement zwischen der Freigabeposition und der Handhabungsposition verstellt. In der Freigabeposition werden die beiden Schenkel des U-förmigen Arretierelements so bewegt, dass das zapfenförmige Koppelelement zwischen die Schenkel einfährt und an dem die Schenkel verbindenden Abschnitt des Arretierelements anliegt. Dann wird das Arretierelement verdreht, so dass die beiden Schenkel des U-förmigen Arretierelements bei einer Bewegung der Tragrollenhandhabungsvorrichtung zum Ofen hin oder vom Ofen weg entweder an dem zapfenförmigen Koppelelement ziehen, wodurch die Tragrolle aus dem Ofen gezogen wird, oder dieses drückend schieben, wodurch die Tragrolle in den Ofen geschoben wird.

Sofern der Rollenherdofen mit einer Schutzgasatmosphäre betrieben wird, ist es in weiterer Ausgestaltung der Tragrollenhandhabungsvorrichtung von besonderem Vorteil, wenn die Tragrollenhandhabungsvorrichtung in einem gegenüber der äußeren Umgebung abgedichteten Gehäuse verfahrbar angeordnet ist und wenigstens zum Teil durch eine Schleuse in einer Wandung des Gehäuses aus diesem ausfahrbar ausgebildet ist. Vorzugsweise kann das Innere des Gehäuses auch mit einer Schutzgasatmosphäre befüllbar ausgebildet sein.

In Ausgestaltung des Verfahrens sieht die Erfindung dann vor, dass beim Ineingriffbringen von Handhabungselement und zweitem Rollenhandhabungselement das angetriebene erste Längsende der zu demontierenden Tragrolle von dem ersten Rollenhandhabungselement soweit vertikal nach unten gedrückt wird, bis das zweite Längsende der zu demontierenden Tragrolle vom zweiten Lagerelement nur noch kraftlos geführt wird. Durch diese Maßnahme lässt sich dann die zu demontierende Tragrolle auf einfache Weise aus dem Rollenherdofen ziehen, wenn das erste Lagerelement von der Seitenwand des Rollenherdofens gelöst ist. Denn das erste Lagerelement wird mit dem ersten Längsende der zu demontierenden Tragrolle vom Ofen entfernt, wohingegen das zweite Lagerelement am Rollenherdofen verbleibt und nicht ausgetauscht wird.

Die Erfindung sieht in weiterer Ausgestaltung des Verfahrens vor, dass die aus dem Rollenherdofen herausgezogene Tragrolle von der Tragrollenhandhabungsvorrichtung entfernt wird und die Tragrollenhandhabungsvorrichtung mit einer zu montierenden Tragrolle bestückt wird, wobei beim Bestücken zwischen dem zweiten Rollenhandhabungselement und dem wenigstens einen Handhabungselement des ersten Lagerelements der zu montierenden Tragrolle eine formschlüssige Verbindung hergestellt wird und durch das erste Rollenhandhabungselement das erste Längsende der zu montierenden Tragrolle niedergedrückt wird, wobei die Tragrollenhandhabungsvorrichtung dann wieder zu dem Rollenherdofen hin bewegt wird und die zu montierende Tragrolle dabei in den Rollenherdofen eingebracht wird.

Schließlich sieht die Erfindung in weiterer Ausgestaltung des Verfahrens vor, dass vor dem Herausziehen der zu demontierenden Tragrolle aus dem Rollenherdofen der Rollenherdofen mit Stickstoff gespült wird und/oder die Temperatur im Inneren des Rollenherdofens auf zumindest 850°C, vorzugsweise 800°C, abgesenkt wird. Ferner ist es von Vorteil, wenn die Tragrollenhandhabungsvorrichtung in einem gegenüber der äußeren Umgebung abgedichteten Gehäuse bewegt wird, um die zu demontierende Tragrolle aus dem Rollenherdofen herauszuziehen, wobei vor dem Herausziehen der zu demontierenden Tragrolle aus dem Rollenherdofen eine Schleuse des Gehäuses gasdicht an eine Durchtrittöffnung des Rollenherdofens angedockt wird und anschließend das innere des Gehäuses mit Stickstoff gespült wird. Diese Maßnahmen tragen dazu bei, dass die Stillstandzeit des eigentlichen Produktionsprozesses deutlich verringert werden kann, da für einen Tragrollenwechsel der Rollenherdofen nicht komplett abgekühlt werden muss.

Alternativ dazu kann ein Tragrollenaustausch auch von zwei Tragrollenhandhabungsvorrichtungen vorgenommen werden, was die Austauschzeit weiter reduzieren kann. Dementsprechend sieht die Erfindung in alternativer Ausgestaltung vor, dass die Tragrollenhandhabungsvorrichtung, welche die zu demontierende Tragrolle aus dem Rollenherdofen herausgezogen hat, seitlich zum Rollenherdofen verfahren wird und eine weitere Tragrollenhandhabungsvorrichtung, die mit einer zu montierenden Tragrolle bestückt ist, seitlich des Rollenherdofens an die Position der zu montierenden Tragrolle gefahren wird, wobei beim Bestücken zwischen dem zweiten Rollenhandhabungselement und dem wenigstens einen Handhabungselement des ersten Lagerelements der zu montierenden Tragrolle eine formschlüssige Verbindung hergestellt wird und durch das erste Rollenhandhabungselement das erste Längsende der zu montierenden Tragrolle niedergedrückt wird.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 einen exemplarisch dargestellten Rollenherdofen mit einem erfindungsgemäßen Tragrollenlagerungssystem und einer erfindungsgemäßen Tragrollenhandhabungsvorrichtung in schematischer Draufsicht,
Figur 2 das erfindungsgemäße Tragrollenlagerungssystem in einer seitlichen Schnittansicht,
Figur 3 eine vergrößerte Darstellung der Lagerung der Tragrolle an einer Seitenwand des Rollenherdofens in Schnittansicht,
Figur 4 eine vergrößerte Darstellung der Lagerung der Tragrolle an der anderen Seitenwand des Rollenherdofens in Schnittansicht,
Figur 5 eine perspektivische Ansicht auf ein erstes Lagerelement, welches an einem Gehäuseflansch des Rollenherdofens befestigt ist und welches beim Tragrollenwechsel gemeinsam mit der zu demontierenden Tragrolle ausgetauscht wird,
Figur 6 eine Draufsicht auf einen Lagerdeckel des ersten Lagerelements aus Figur 5,
Figur 7 eine vergrößerte und seitliche Schnittansicht einer drehfesten Verbindung zwischen einem zweiten Lagerelement und dem Längsende der Tragrolle,
Figur 8 eine axiale Schnittansicht auf die drehfeste Verbindung aus Figur 7,
Figur 9 eine perspektivische Ansicht auf eine Tragrolle mit daran angebrachtem ersten Lagerelement,
Figur 10 eine Tragrollenhandhabungsvorrichtung mit einer aus dem Rollenherdofen demontierten Tragrolle mitsamt dem ersten Lagerelement in perspektivischer Ansicht,
Figur 11 eine vergrößerte Detaildarstellung auf die Tragrollenhandhabungsvorrichtung mit daran angekoppelter Tragrolle in Draufsicht,
Figur 12 eine perspektivische Ansicht auf die Tragrollenhandhabungsvorrichtung und deren verschiedene Bauteile,
Figur 13 eine vergrößerte Ansicht auf ein erstes und zweites Rollenhandhabungselement der Tragrollenhandhabungsvorrichtung,
Figur 14 eine seitliche Ansicht auf die erfindungsgemäße Tragrollenhandhabungsvorrichtung in einer Grundstellung und
Figur 15 eine seitliche Ansicht auf die erfindungsgemäße Tragrollenhandhabungsvorrichtung in einer Stellung für eine angehobene Tragrolle.

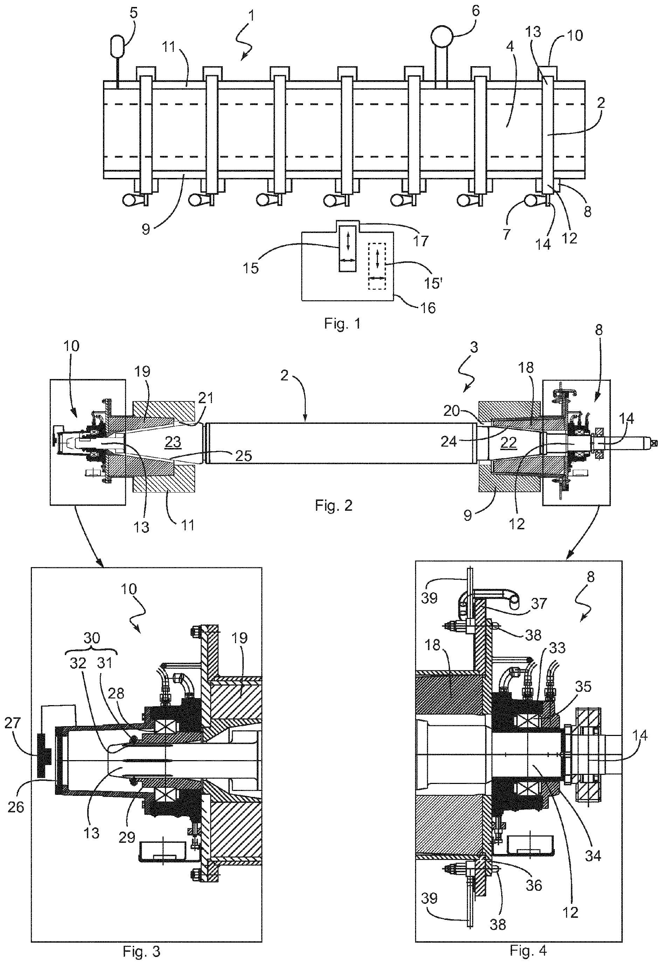

In Figur 1 ist in schematischer Draufsicht ein Rollenherdofen 1 gezeigt, bei dem die jeweiligen Tragrollen 2 mittels eines jeweiligen Tragrollenlagerungssystems 3, welches in Figur 2 in Schnittdarstellung zu sehen ist, drehbar gelagert sind. In dem in Figur 1 gezeigten Ausführungsbeispiel ist der Rollenherdofen 1 zum kontinuierlichen Wärmebehandeln von Stahlbändern 4 ausgebildet. Figur 1 ist eine exemplarische Darstellung und zeigt lediglich einen Ausschnitt des Rollenherdofens 1. Für diesen Ausschnitt weist der Rollenherdofen 1 sieben Tragrollen 2 auf, wobei aus Gründen der Übersichtlichkeit nur eine der sieben Tragrollen 2 mit verschiedenen Bezugszeichen versehen ist. Der Rollenherdofen 1 ist gegenüber seiner Umgebung hermetisch abgeschlossen und wird unter einer Schutzgasatmosphäre betrieben. Die Tragrollen 2 sind entlang der Längsachse des Rollenherdofens 1 angeordnet und transportieren das mit Wärme zu behandelnde Stahlband 4, wobei der Prozess bei Temperaturen von über 1000°C im Inneren des Rollenherdofens 1 stattfindet. Eine Heizvorrichtung 5 sorgt für die für den Prozess erforderliche Temperatur im Inneren des Rollenherdofens 1, wohingegen eine Schutzgasvorrichtung 6 dafür verantwortlich ist, dass sich im Inneren des Rollenherdofens 1 die gewünschte Schutzgasatmosphäre einstellt. Jede Tragrolle 2 ist außerhalb des Rollenherdofens 1 mit einer Antriebseinheit 7 verbunden, welche die jeweilige Tragrolle 2 rotierend antreibt, um das Stahlband 4 durch den Rollenherdofen 1 zu fördern.

Das erfindungsgemäße Tragrollenlagerungssystem 3, welches in den Figuren 1 bis 8 in unterschiedlichsten Ansichten gezeigt ist, umfasst ein erstes Lagerelement 8, welches auf einer ersten Seitenwand 9 des Rollenherdofens 1 angebracht ist und bei einem Tragrollenwechsel von der ersten Seitenwand 9 gelöst werden muss, und ein zweites Lagerelement 10, welches auf einer der ersten Seitenwand 9 gegenüberliegenden, zweiten Seitenwand 11 des Rollenherdofens 1 angebracht ist und bei einem Tragrollenwechsel von der zweiten Seitenwand 11 nicht gelöst werden muss. Bei dem Tragrollenlagerungssystem 3 ist eine jeweilige Tragrolle 2 mit ihrem ersten Längsende 12 mittels des ersten Lagerelements 8 und mit ihrem zweiten Längsende 13 mittels des zweiten Lagerelements 10 drehbar im Rollenherdofen 1 gelagert, wobei das erste Lagerelement 8 und das zweite Lagerelement 10 derart gasdicht ausgebildet sind, dass während des Ofenbetriebs kein Schutzgas aus dem Inneren des Rollenherdofens 1 entweichen kann. Von dem ersten Längsende 12 einer jeweiligen Tragrolle 2 aus erstreckt sich ein Wellenzapfen 14, der aus einem jeweiligen ersten Lagerelement 8 nach außen hin hervorsteht und mit einer zugeordneten Antriebseinheit 7 antriebsverbunden ist, durch die eine jeweilige Tragrolle 2 im Betrieb des Rollenherdofens 1 gedreht wird. Bei einem Wechsel einer Tragrolle 2 wird zunächst die Antriebseinheit 7 von dem Wellenzapfen 14 gelöst, bevor dann die zu demontierende Tragrolle 2 mitsamt dem ersten Lagerelement 8 vom Rollenherdofen 1 entfernt wird, wohingegen das zweite Lagerelement 10 am Rollenherdofen 1 verbleibt und auch die neu einzusetzende Tragrolle 2 drehbar lagert.

Wie Figur 1 ferner schematisch zeigt, ist seitlich vom Rollenherdofen 1 eine Tragrollenhandhabungsvorrichtung 15 angeordnet, die entlang der ersten Seitenwand 9 des Rollenherdofens 1 verfahrbar ist, um vor einer zu demontierenden Tragrolle 2 positioniert zu werden. Zur Montage wird das erste Lagerelement 8 von der ersten Seitenwand 9 gelöst und die auszuwechselnde Tragrolle 2 mitsamt dem ersten Lagerelement 8 aus dem Rollenherdofen 1 gezogen. Zusätzlich ist die Tragrollenhandhabungsvorrichtung 15 zu der Seitenwand 9 hin und von dieser weg bewegbar. Dabei kann eine einzige Tragrollenhandhabungsvorrichtung 15 sowohl zur Demontage einer Tragrolle 2 vom Rollenherdofen 1 als auch zur Montage einer neuen Tragrolle 2 eingesetzt werden. Denkbar ist aber auch, dass eine Tragrollenhandhabungsvorrichtung 15 zur Demontage eingesetzt wird und anschließend vom Ofen wegbewegt wird, wonach zur Montage eine weitere Tragrollenhandhabungsvorrichtung 15' verwendet wird, die mit einer zu montierenden Tragrolle 2 bestückt ist, was in Figur 1 schematisch angedeutet ist. Ein solcher Tragrollenwechsel kann somit mit einer oder zwei Tragrollenhandhabungsvorrichtungen 15, 15' bei abgeschaltetem und abgekühltem Rollenherdofen 1 erfolgen, wobei der Rollenherdofen 1 vor dem Tragrollenwechsel mit Stickstoff gespült wird. Früher nahm ein Rollenwechsel, bei dem der Rollenherdofen 1 abkühlen musste, mehrere Tage in Anspruch, wobei zusätzlich der gesamte Prozess der Wärmebehandlung unterbrochen werden musste. Daher ist ein Tragrollenwechsel wünschenswert, bei dem die Betriebsbedingungen des Rollenherdofens 1 im Wesentlichen aufrechterhalten werden, wobei aber beim Wechsel keine Verunreinigungen in das Innere des Rollenherdofens 1 gelangen dürfen. Aus diesem Grund kann der Tragrollenwechsel nur unter Bedingungen seitlich des Rollenherdofens 1 durchgeführt werden, bei denen der Betrieb der Tragrollenhandhabungsvorrichtung 15, 15' gegenüber der äußeren Umgebung abgeschirmt ist. Dementsprechend ist es naheliegend, dass die Tragrollenhandhabungsvorrichtung 15, 15' in einem abgedichteten Gehäuse 16 betrieben wird, damit ein Tragrollenwechsel insgesamt unter Ausschluss der äußeren Atmosphäre erfolgen kann. In einem solchen gasdichten bzw. gegenüber der äußeren Umgebungsatmosphäre abgedichteten Gehäuse 16 sind dann die eine einzige oder die beiden Tragrollenhandhabungsvorrichtungen 15, 15' verfahrbar angeordnet und untergebracht. Auch bei einem Tragrollenwechsel mit einem solchen gasdichten Gehäuse 16, welches gegenüber der äußeren Umgebung hermetisch abgedichtet ist, wird vor dem eigentlichen Tragerollenwechsel die Antriebseinheit 7 von dem Wellenzapfen 14 der Tragrolle 2 entfernt. Eine Schleuse 17 des Gehäuses 16 ist in einer Wandung des Gehäuses 16 vorgesehen, durch die das Gehäuse 16 abgedichtet gegenüber der äußeren Atmosphäre bzw. Umgebung an den Rollenherdofen 1 andockbar ist. Dabei umschließt die Schleuse 17 das erste Lagerelement 8, welches zusammen mit der zu demontierenden Tragrolle 2 aus dem Rollenherdofen 1 dann herausgezogen wird. Mit anderen Worten ist die eine oder sind die beiden Tragrollenhandhabungsvorrichtungen 15, 15' in einem gegenüber der äußeren Umgebung abgedichteten Gehäuse 16 verfahrbar angeordnet und wenigstens zum Teil durch eine Schleuse 17 in einer Wandung des Gehäuses 16 aus diesem ausfahrbar, um Zugriff auf die zu demontierende Tragrolle 2 zu haben. Nach dem Spülen des Rollenherdofens 1 mit Stickstoff und dem Andocken bzw. Ankoppeln des gasdichten Gehäuses 16 an dem Rollenherdofen 1 wird das Gehäuse 16 selbst mit Stickstoff gespült, so dass die Atmosphäre des Inneren des Gehäuses 16 der Atmosphäre des Inneren des Rollenherdofens 1 entspricht. Durch das Spülen wird der eigentliche Wärmebehandlungsprozess unterbrochen. Es ist aber bei absoluter Gasdichtheit des Gehäuses 16 möglich, einen Tragrollenwechsel auch ohne Spülen und bei Weiterführung des Wärmebehandlungsprozesses durchzuführen, wenn im Inneren des Gehäuses 16 die gleiche Atmosphäre wie im Inneren des Rollenherdofens 1 hergestellt wird. Auch bei Unterbringung in dem Gehäuse 16 kann die Tragrollenhandhabungsvorrichtung 15 oder können die beiden Tragrollenhandhabungsvorrichtungen 15, 15' innerhalb des Gehäuses wenigstens in zwei Raumrichtungen verfahrbar sein, was durch die Pfeile in Figur 1 angedeutet ist. Zusätzlich ist das Gehäuse 16 in wenigstens zwei Raumrichtungen verfahrbar, um seitlich an die gewünschte Tragrolle 2 heranzufahren und um sich zum Andocken sich der ersten Seitenwand 9 zu nähern. Sofern es bei dem Tragrollenwechsel nicht erforderlich ist, dass der Wechsel auf der ersten Seite unter Ausschluss der äußeren Umgebungsatmosphäre stattfindet, können die beiden Tragrollenhandhabungsvorrichtungen 15, 15' verfahrbar auf einem fahrbaren Gestell angeordnet sein.

Die nachstehenden Ausführungen zum Tragrollenlagerungssystem 3 und zur Tragrollenhandhabungsvorrichtung 15 gelten sowohl für einen Tragrollenwechsel unter Ausschluss der äußeren Umgebungsatmosphäre, also mit Verwendung eines gasdichten Gehäuses 16, als auch dann, wenn kein gasdichtes Gehäuse 16 verwendet wird und kein Ausschluss der Umgebungsatmosphäre erforderlich ist. Das erfindungsgemäße Tragrollenlagerungssystem 3 und die erfindungsgemäße Tragrollenhandhabungsvorrichtung 15 sind universell einsetzbar.

Bei dem Tragrollenlagerungssystem 3 erstreckt sich mit Bezug auf die Figuren 2, 3 und 4 die Tragrolle 2 im Bereich ihrer Längsenden 12, 13 durch jeweilige Dichtstopfen 18, 19 hindurch. Die Dichtstopfen 18 und 19 selbst sind wiederum in Durchtrittsöffnungen 20, 21 angeordnet, die in den Seitenwänden 9, 11 des Rollenherdofens 1 ausgeformt sind. Dabei sind beide Dichtstopfen 18, 19 von außen in die Durchtrittsöffnungen 20, 21 eingebracht. Die Dichtstopfen 18, 19 dienen dazu, dass die Hitzestrahlung aus dem Inneren des Rollenherdofens 1 nicht direkt auf die Lagerelemente 8 und 10 strahlt. Die Dichtstopfen 18, 19 stellen folglich eine Art Hitzeschild dar. Ebenso wie das zweite Lagerelement 10, so verbleibt auch der dortige Dichtstopfen 19 bei einem Tragrollenwechsel am Rollenherdofen 1. Demgegenüber wird der Dichtstopfen 18 auf der Seite des ersten Lagerelements 8 beim Tragrollenwechsel zusammen mit dem Lagerelement 8 und der Tragrolle 2 demontiert. Eine jeweilige Tragrolle 2 weist konische Abschnitte 22, 23 auf. Durch diese konischen Abschnitte 22, 23 verjüngt sich der Querschnitt einer jeweiligen Tragrolle 2 zu ihren Längsenden 12, 13 hin. Ferner sind die beiden Dichtstopfen 18, 19 mit konischen Durchtrittsöffnungen 24, 25 ausgebildet. Die konischen Abschnitte 22, 23 der Tragrolle 2 sind wenigstens abschnittsweise in den zugeordneten Dichtstopfen 18, 19 bzw. in deren Durchtrittsöffnungen 24, 25 angeordnet. Bei einem Tragrollenwechsel beim seitlichen Herausziehen der Tragrolle 2 aus dem Rollenherdofen 1 wird der Dichtstopfen 18 mit herausgezogen, da der Dichtstopfen 18 mechanisch mit dem ersten Lagerelement 8 verbunden ist.

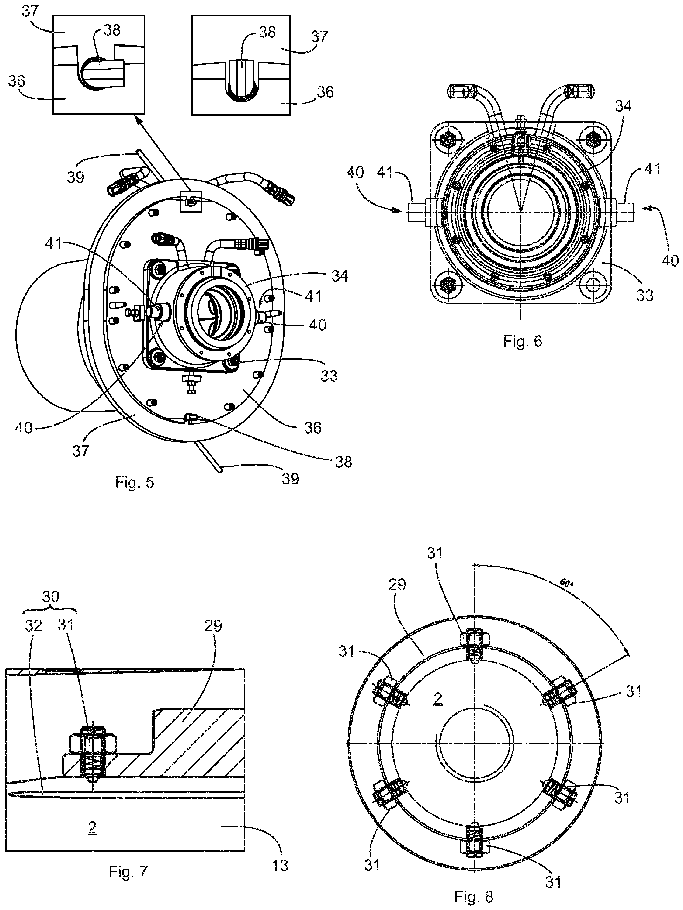

Die Figur 3 zeigt eine vergrößerte Detailansicht des zweiten Lagerelements 10, wohingegen in Figur 4 eine Vergrößerung der Details des ersten Lagerelements 8 gezeigt ist. Wie in Figur 3 dargestellt ist, weist das zweite Lagerelement 10 ein Sichtfenster 26 zur visuellen Überwachung eines Tragrollenwechsels auf. In dem in Figur 3 gezeigten Ausführungsbeispiel ist an dem Sichtfenster 26 des zweiten Lagerelements 8 eine Überwachungskamera 27 zur visuellen Überwachung des Tragrollenwechsels demontierbar angebracht. Mit Hilfe dieser visuellen Überwachungsmöglichkeit kann sowohl die Demontage als auch die Montage einer Tragrolle 2 beobachtet werden. Sollte durch das Sichtfenster 26 entweder direkt von einer Bedienperson oder indirekt über die Überwachungskamera 27 beobachtet werden, dass die Tragrolle 2 nicht im Wesentlichen waagerecht aus dem Rollenherdofen 1 gezogen wird, können Gegenmaßnahmen eingeleitet werden, um die Tragrolle 2 entsprechend auszurichten. Ferner kann durch das Sichtfenster 26 überprüft werden, ob beim Einbau einer neuen Tragrolle 2 das zweite Längsende 13 der Tragrolle 2 mit einem Loslager 28 des zweiten Lagerelements 10 gekoppelt ist. Zum Zwecke der Kopplung weist das zweite Lagerelement 10 ferner eine drehbar gelagerte Lagerhülse 29 auf. Die Lagerhülse 29 ist mit dem zweiten Längsende 13 der Tragrolle 2 über eine drehfeste Verbindung 30 verbunden. Diese drehfeste Verbindung 30, die zwischen der Lagerhülse 29 und dem zweiten Längsende 13 der Tragrolle 2 ausgebildet ist, ist zusätzlich in den Figuren 7 und 8 dargestellt und umfasst in der dargestellten Ausführungsform insgesamt sechs federnde Druckstücke 31, die an der Lagerhülse 29 befestigt sind. Die drehfeste Verbindung 30 umfasst ferner mehrere Nuten 32, die in dem zweiten Längsende 13 der Tragrolle 2 ausgeformt sind und in ihrer Anzahl der Anzahl der Druckstücke entsprechen. Denn zur Ausbildung der drehfesten Verbindung 30 rasten die federnden Druckstücke 31 in die zugeordneten Nuten 32 ein. Die Druckstücke 31 und die Nuten 32 sind gleichmäßig um den Umfang der Lagerhülse 29 bzw. des zweiten Längsendes 13 der Tragrolle 2 angeordnet. Durch diese drehfeste Verbindung 30, die lösbar ist, kann das zweite Längsende 13 der Tragrolle 2 auf einfache Weise mit dem Loslager 28 gekoppelt werden, denn die federnden Druckstücke 31 werden beim Einschieben einer Tragrolle 2 von dem zweiten Längsende 13 zunächst radial nach außen weggedrückt. Bei Drehung der Tragrolle 2 gelangen dann die Druckstücke 31 in die Bereiche der zugeordneten Nuten 32 und rasten in diese ein, wodurch die drehfeste Verbindung 30 hergestellt ist. Um die drehfeste Verbindung 30 wieder zu lösen, muss lediglich die Tragrolle 2 axial aus dem Loslager 28 gezogen werden, wodurch die Druckstücke 31 radial nach außen gedrückt und aus den Nuten 32 geschoben werden.

In Figur 4 ist das erste Lagerelement 8 in einer vergrößerten Detailansicht dargestellt. Wie zu sehen ist, umfasst das erste Lagerelement 8 ein Lagergehäuse 33 und einen Lagerdeckel 34, der auf das Lagergehäuse 33 geschraubt ist. In dem Lagergehäuse 33 ist ein Festlager 35 zur drehbaren Lagerung des ersten Längsendes 12 der Tragrolle 2 aufgenommen. Ferner umfasst das erste Lagerelement 8 eine Lagerzwischenplatte 36, auf der das Lagergehäuse 33 zusammen mit dem Lagerdeckel 34 sitzt. Die Lagerzwischenplatte 36 ist zugleich die Flanschplatte des Dichtstopfens 18, der daran befestigt ist. Über die Lagerzwischenplatte 36 sind das Lagergehäuse 33 und der Lagerdeckel 34 an einem Gehäuseflansch 37 befestigt, der an der ersten Seitenwand 9 des Drehherdofens 1 angebracht ist. Wenn eine Tragrolle 2 auszutauschen ist, so wird die gasdichte Schraubverbindung, welche von der Lagerzwischenplatte 36 und dem Gehäuseflansch 37 ausgebildet ist, gelöst und das erste Lagerelement 8, welches das Lagergehäuse 33, den Lagerdeckel 34, das Festlager 35 und die Lagerzwischenplatte 36 umfasst, zusammen mit der Tragrolle 2 und dem Dichtstopfen 18 demontiert und vom Rollenherdofen 1 weg transportiert. Elemente des ersten Lagerelements 8 sind zusätzlich zu den Darstellungen in den Figuren 2 und 4 auch den Figuren 5 und 6 zu entnehmen. Im montierten Zustand der Tragrolle 2 dichtet die Lagerzwischenplatte 36 an dem Gehäuseflansch 37 ab. Darüber hinaus hat die Lagerzwischenplatte 36 die wichtige Funktion, die Gasdichtheit während der Vorbereitungen zur Demontage der Tragrolle 2 zu gewährleisten. Denn in einem ersten Schritt der Demontage wird die Antriebseinheit 7 von dem Wellenzapfen 14 entfernt, damit die Tragrollenhandhabungsvorrichtung 15 an die zu demontierende Tragrolle 2 heranfahren kann. Wenn ein Tragrollenaustausch unter absoluter Gasdichtheit gefordert ist, d.h. wenn ein Wechsel einer Tragrolle unter Ausschluss der äußeren Umgebungsatmosphäre gewährleistet sein muss, dann ist die Tragrollenhandhabungsvorrichtung 15 in dem gasdichten Gehäuse 16 angeordnet, so dass die rüsselförmige Schleuse 17 über die Lagerzwischenplatte 36 geschoben wird und auf dem Gehäuseflansch 37 dichtend anliegt. Um bis zum Anliegen der Schleuse 17 an dem Gehäuseflansch 37 die Gasdichtheit zu gewährleisten, dichtet die Lagerzwischenplatte 36 gegen den Gehäuseflansch 37 ab, selbst wenn die Schraubverbindungen zwischen der Lagerzwischenplatte 36 und dem Gehäuseflansch 37 gelöst sind. Für die Gasdichtheit sind sogenannte Vorreiber 38 jeweils an der Ober- und Unterseite des Gehäuseflanschs 37 vorgesehen, die mit der Lagerzwischenplatte 36 zusammenwirken und über jeweilige Betätigungshebel 39 zwischen einer die Dichtheit herstellenden Schließposition (siehe obere linke Darstellung in Figur 5) und einer Freigabeposition (siehe obere rechte Darstellung in Figur 5) verstellbar sind. Die Vorreiber 38 sind solange in der Schließposition angeordnet, bis die Schleuse 17 des Gehäuses 16 gasdicht an den Gehäuseflansch 37 angedockt ist. Erst dann werden manuell die Betätigungshebel 39 betätigt, um die Vorreiber 38 aus ihrer Schließposition in die Freigabeposition zu bewegen, in welcher dann die Lagerzwischenplatte 36 bzw. das gesamte erste Lagerelement 8 vom Rollenherdofen 1 demontierbar sind.

Zur Demontage der Tragrolle 2 muss diese aus dem Rollenherdofen 1 herausgezogen werden. Zu diesem Zweck weist das erste Lagerelement 8 zur Handhabung der Tragrolle 2 dienende Handhabungselemente 40 auf. Die Handhabungselemente 40, die zum Beispiel in den Figuren 5 und 6 gezeigt sind, sind zum Tragrollenwechsel mit der Tragrollenhandhabungsvorrichtung 15 mechanisch koppelbar und formschlüssig verbindbar ausgebildet, um die Tragrolle 2 mitsamt dem ersten Lagerelement 8 aus dem Rollenherdofen 1 herauszuziehen. Ebenso dient die mechanische Kopplung und formschlüssige Verbindung zwischen Handhabungselementen 40 und der Tragrollenhandhabungsvorrichtung 15 dazu, die Tragrolle 2 mitsamt dem ersten Lagerelement 8 in den Rollenherdofen 1 einzubringen. Folglich dient die mechanische Kopplung und formschlüssige Verbindung zwischen Handhabungselementen 40 und der Tragrollenhandhabungsvorrichtung 15 sowohl der Demontage einer auszuwechselnden Tragrolle 2 als auch der Montage einer einzubauenden Tragrolle 2. Dabei sind die Handhabungselemente 40 in dem dargestellten Ausführungsbeispiel außenseitig an dem ersten Lagerelement 8 angeformte zapfenförmige Koppelelemente 41. In dem gezeigten Ausführungsbeispiel sind diese zapfenförmig ausgebildeten Koppelelemente 41 diametral zueinander angeordnet und erstrecken sich seitlich radial von dem ersten Lagerelement 28 im Wesentlichen parallel zur ersten Seitenwand 9 des Rollenherdofens 1. Insbesondere erstrecken sich die Koppelelemente 41 waagerecht. Mit anderen Worten ausgedrückt, bildet die Verbindungslinie der Koppelelemente 41 eine Waagerechte. Die Koppelelemente 41 haben zwei Funktionen. Zum einen dienen die Koppelelemente 41 dazu, dass die Tragrolle 2 aus dem Rollenherdofen 1 herausgezogen werden kann. Zum anderen bilden die Koppelelemente 41 eine Art Drehachse bzw. eine Art Drehpunkt, um welche die Tragrolle 2 verschwenkt werden kann, sollte ein Ausgleich beim Herausziehen einer zu demontierenden Tragrolle 2 oder beim Einschieben einer zu montierenden Tragrolle 2 notwendig sein. Die genaue Funktionsweise der Koppelelemente 41 wird bei der nachstehenden Beschreibung der Tragrollenhandhabungsvorrichtung 15 noch ersichtlicher werden.

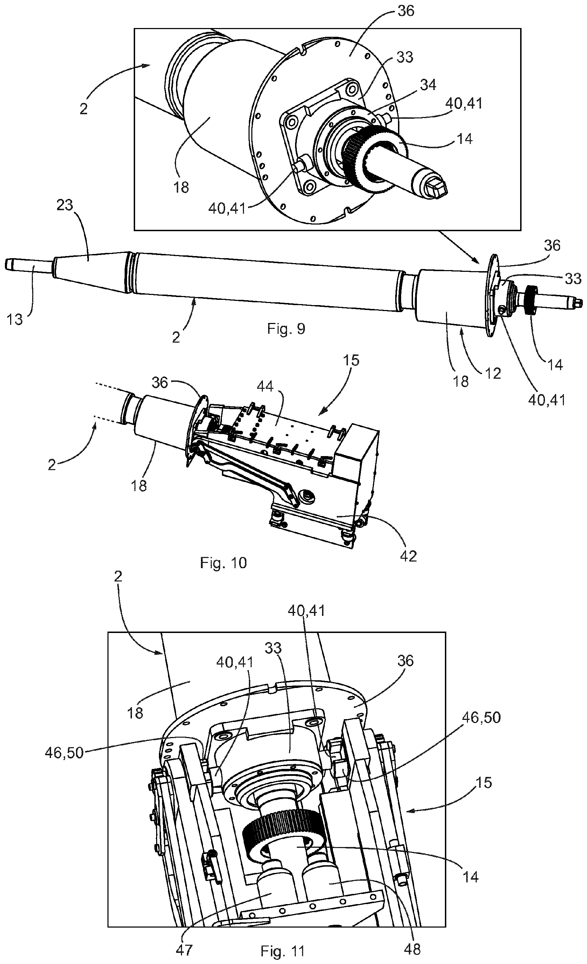

Die Tragrollenhandhabungsvorrichtung 15, die dem Wechsel einer Tragrolle 2 des Rollenherdofens 1 dient, ist in den Figuren 10 bis 15 gezeigt. Die Tragrollenhandhabungsvorrichtung 15 weist einen Basisträger 42, eine Antriebseinrichtung 43, einen Schwenkträger 44, ein erstes Rollenhandhabungselement 45 und ein zweites Rollenhandhabungselement 46 auf. Der Basisträger 42 ist mit Hilfe der Antriebseinrichtung 43, die auf dem Basisträger 42 angeordnet ist, verfahrbar ausgebildet, so dass die Tragrollenhandhabungsvorrichtung 15 in eine Raumrichtung zur ersten Seitenwand 9 des Rollenherdofens 1 hin und von der ersten Seitenwand 9 weg verfahrbar ist. An dem Basisträger 42 ist ferner der Schwenkträger 44 angebracht, wobei an dem Schwenkträger 44 selbst das erste Rollenhandhabungselement 45 angebracht ist.

Das erste Rollenhandhabungselement 45 dient zum Anheben einer Tragrolle 2 bei deren Demontage oder Montage und umfasst in dem dargestellten Ausführungsbeispiel zwei Andrückrollen 47 und 48, die auf die Oberseite des Wellenzapfens 14 drücken. Da die heißen Tragrollen 2 im Innenraum des Rollenherdofens 1 und insbesondere die auszutauschende, heiße Tragrolle 2 aufgrund der hohen Temperatur in kurzen Zeitintervallen gedreht werden müssen, jedoch die zu demontierende Tragrolle 2 von der Antriebseinheit 7 entkoppelt ist, ist die Andrückrolle 48 als eine angetriebene Treibrolle ausgebildet, die mit einem separaten Antrieb 49 gekoppelt ist. Der Antrieb 49 sorgt somit dafür, dass die auszubauende Tragrolle in kurzen Zeitintervallen gedreht wird, um beispielsweise ein Anbacken der Tragrolle 2 an dem mit Wärme zu behandelnden Stahlband 4 zu vermeiden. Dabei hebt das Rollenhandhabungselement 45 bzw. heben die beiden Andrückrollen 47, 48 die zu handhabende (zu demontierende oder zu montierende) Tragrolle 2 nicht an, sondern drücken auf den Wellenzapfen 14 bzw. halten diesen nieder (siehe zum Beispiel Figur 11).

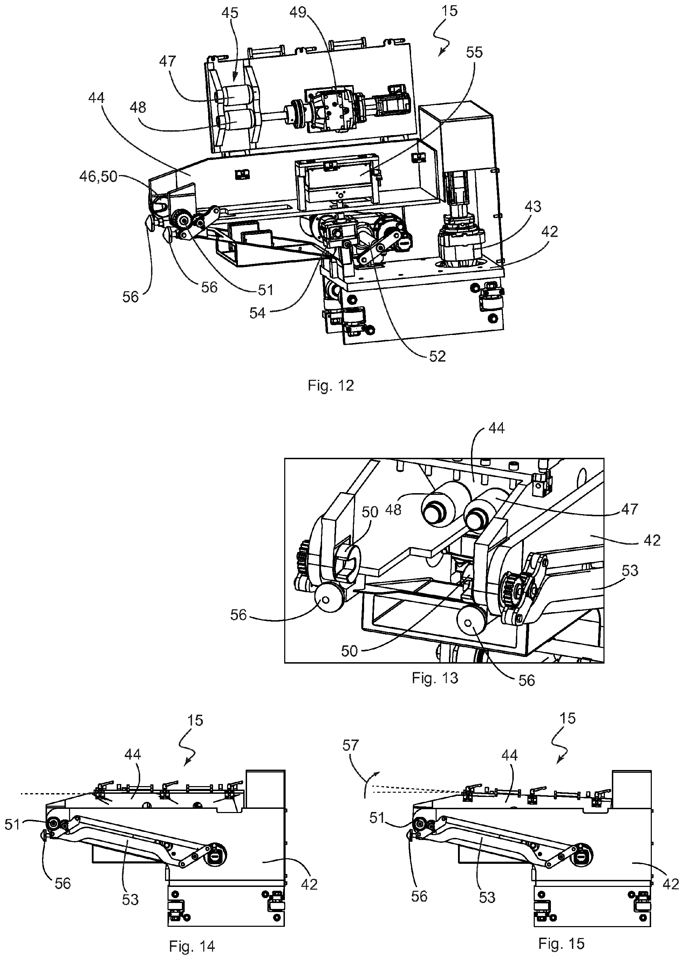

Als eine Art Gegenlager zu der durch das Niederdrücken des ersten Rollenhandhabungselements 45 aufgebrachten Kraft dient das zweite Rollenhandhabungselement 46, welches insbesondere aus den Figuren 11, 12 und 13 ersichtlich ist. Das zweite Rollenhandhabungselement 46 ist an dem Basisträger 42 angebracht und zwischen einer Handhabungsposition und einer Freigabeposition verstellbar ausgebildet. In der Handhabungsposition, die zum Beispiel in Figur 11 gezeigt ist, ist das zweite Rollenhandhabungselement 46 zum Tragrollenwechsel mit der Tragrolle 2 mechanisch gekoppelt und formschlüssig verbunden. Die Freigabeposition, in welcher die mechanische Kopplung und formschlüssige Verbindung zwischen Tragrolle 2 und dem zweiten Rollenhandhabungselement 46 freigegeben ist, ist in den Figuren 12 und 13 gezeigt. Wie aus den Figuren ersichtlich ist, weist das zweite Rollenhandhabungselement 46 zwei Arretierelemente 50 auf, die U-förmig ausgebildet sind (siehe zum Beispiel Figur 13). Die beiden U-förmigen Arretierelemente 50 sind bei gedachter Verbindungslinie auf einer Waagerechten und derart beabstandet voneinander angeordnet, dass sie in der Freigabeposition die zapfenförmigen Koppelelemente 41 des ersten Lagerelements 8 zwischen ihren beiden Schenkeln aufnehmen, bis die jeweiligen Koppelelemente 41 an dem zugeordneten Verbindungssteg der beiden Schenkel des jeweiligen U-förmigen Arretierelements 50 anliegen. In dieser Position werden dann die Arretierelemente 50 um den in Bezug auf den Basisträger 42 ortsfesten Drehpunkt 51 gedreht, so dass die schlitzförmige Öffnung des U-förmigen Arretierelements 50 in vertikaler Richtung weist, wie es in Figur 11 gezeigt ist. Das Arretierelement 50 weist eigentlich eine scheibenförmige Gestalt auf, wobei die schlitzförmige Öffnung dem Arretierelement 50 ein U-förmiges Erscheinungsbild verleiht. Für die Verstellung eines jeweiligen Arretierelements 50 um den jeweiligen Drehpunkt 51 sorgt ein Verstellantrieb 52, der auf dem Basisträger 42 angebracht ist und über einen stangenförmigen Drehmechanismus 53 mit dem zweiten Rollenhandhabungselement 46 bewegungsgekoppelt ist, so dass eine Bewegung des Drehmechanismus 53 das zweite Rollenhandhabungselement 46 zwischen der Freigabeposition und der Handhabungsposition verstellt.

Die Kraft, mit welcher das erste Rollenhandhabungselement 45 auf den Wellenzapfen 14 drückt, muss so bemessen sein, dass zwischen der angetriebenen Andrückrolle 48 und dem Wellenzapfen 14 ein Kraftschluss vorherrscht, um die Tragrolle 2 zu drehen. Ob sich die Tragrolle 2 mit der Andrückrolle 48 mitdreht, wird von einem nicht dargestellten Initiator am Ende des Tragrollenzapfens überwacht. Sollte sich die Tragrolle 2 nicht mitdrehen, kann die Andrückkraft der Andrückrolle 48 manuell von einer Bedienperson erhöht werden. Jedoch ist darauf zu achten, dass die aufgebrachte Andrückkraft keinen Schwellenwert überschreitet, denn eine zu große Kraft kann den Rollenzapfen verbiegen. Zur Überwachung ist deshalb eine Druckmessdose 55 vorgesehen, die beispielsweise in Figur 12 gezeigt ist und in dem Ausführungsbeispiel auf dem Schwenkträger 44 angeordnet ist. Zur Erhöhung (oder auch Verringerung) der Andrückkraft muss daher der Schwenkträger 44 mitsamt den Andrückrollen 47, 48 abgesenkt werden, was mit Hilfe einer Höhenverstellvorrichtung 54 erfolgt. Die Höhenverstellvorrichtung 54 ist ein Spindelhubgetriebe, welches auf dem Basisträger 42 angeordnet ist und den Schwenkträger 44 anhebt oder absenkt, um die auf den Wellenzapfen 14 wirkende Kraft durch die Andrückrollen 47, 48 zu verändern. Die Höhenverstellvorrichtung 54, welche direkt an die Kraftmessdose 55 angeschlossen ist, stützt den Schwenkträger 44 folglich an dem Basisträger 42 ab. Dabei führt ein Anheben oder Absenken des Schwenkträgers 44 durch die Höhenverstellvorrichtung 54 dazu, dass der Schwenkträger 44 um den ortsfesten Drehpunkt 51 verschwenkt wird. Eine abgesenkte Position des Schwenkträgers 44 aus einer in Figur 14 dargestellten Grundposition ist in Figur 15 gezeigt, wobei die Verschwenkung um den Drehpunkt 51 durch die gestrichelten Linien und den Pfeil 57 angedeutet ist.

Bei der Konstruktion der Rollenhandhabungselemente 45, 46 der Tragrollenhandhabungsvorrichtung 15 ist folglich das zweite Rollenhandhabungselement 46 als ein an dem ersten Lagerelement 8 der handzuhabenden Tragrolle 2 anordenbarer Drehpunkt 51 für die handzuhabende Tragrolle 2 ausgebildet, wobei das erste Rollenhandhabungselement 45 als ein auf die handzuhabende Tragrolle 2 drückender und dadurch die handzuhabende Tragrolle 2 um den von dem zweiten Rollenhandhabungselement 46 ausgebildeten Drehpunkt 51 verschwenkender Niederhalter ausgebildet ist, der dafür sorgt, dass das erste Längsende 12 der zu demontierenden Tragrolle 2 von dem ersten Rollenhandhabungselement 46 soweit vertikal nach unten gedrückt wird, bis das zweite Längsende 13 der zu demontierenden Tragrolle 2 vom zweiten Lagerelement 10 nur noch kraftlos geführt ist bzw. geführt wird.

Die Tragrollenhandhabungsvorrichtung 15 weist ferner in dem dargestellten Ausführungsbeispiel zwei Distanzbolzen 56 auf, die der vertikalen Positionierung des Lagerelements 8 bei Demontage und Montage einer Tragrolle 2 dienen. Die Distanzbolzen 56 sind vertikal versetzt zu den beiden Arretierelementen 50 an dem Rahmen des Basisträgers 42 angebracht und verhindern ein Abkippen der Tragrollenlagerung bzw. des ersten Lagerelements 8 und des Dichtstopfens 18, wenn die Tragrolle 2 gehandhabt wird.

In Bezug auf das nachstehend beschriebene Verfahren sei angemerkt, dass die Beschreibung zwar für einen Austausch von Tragrollen 2 beschrieben wird, bei denen die zum Wechsel dienende Tragrollenhandhabungsvorrichtung 15 (und ggf. 15') in einem gegenüber der äußeren Umgebungsatmosphäre gasdichten Gehäuse 16 angeordnet ist und betrieben wird. Jedoch ist eine Verwendung der Tragrollenhandhabungsvorrichtung 15 selbstverständlich auch ohne ein solches Gehäuse 16 möglich, sollte der Tragrollenwechsel bei einem ausreichend abgekühlten Rollenherdofen 1 stattfinden, bei dem der Prozess der Wärmebehandlung von Werkstücken für die Zeit der Wartung und/oder des Tragrollenaustauschs eingestellt ist. Selbstverständlich sind zu dem Verfahren auch einzelne Schritte zu zählen, die bereits vorstehend in Verbindung mit der Beschreibung der konstruktiven Merkmale erwähnt wurden.

Mit dem wie in Figur 1 gezeigten Gehäuse 16 hat die Tragrollenhandhabungsvorrichtung 15 (und ggf. 15') die Aufgabe, an einem mit Schutzgas gefüllten Industrieofen bzw. Rollenherdofen 1, der sich noch unter Temperatur befindet, einen Tragrollenwechsel durchzuführen. Bei dem erfindungsgemäßen Verfahren zum Austausch von Tragrollen 2 des Rollenherdofens 1 wird das vorstehend beschriebene Tragrollenlagerungssystem 3 und die vorstehend beschriebene Tragrollenhandhabungsvorrichtung 15 (ggf. 15') verwendet, wobei die Tragrollenhandhabungsvorrichtung 15 in einem ersten Schritt des Verfahrens seitlich neben dem Rollenherdofen 1 an die Position der zu demontierenden Tragrolle 2 gefahren wird, wobei danach oder parallel die Antriebseinheit 7 von der von dem Wellenzapfen 14 zu demontierenden Tragrolle 2 entkoppelt und die Befestigung des ersten Lagerelements vom Rollenherdofen 1 gelöst wird. Anschließend wird dann die Tragrollenhandhabungsvorrichtung 15 an die zu demontierende Tragrolle 2 herangefahren, damit die Schleuse 17 des gasdichten Gehäuses 16 das erste Lagerelement 8 aufnehmen und an der ersten Seitenwand 9 des Rollenherdofens 1 gasdicht andocken kann. Sobald die Schleuse 17 gasdicht auf dem Gehäuseflansch 37 aufliegt, können die bislang die Gasdichtheit garantierenden Vorreiber 38 manuell über die Betätigungshebel 39 verstellt werden, damit die Vorreiber 39 aus der Schließposition in die Freigabeposition überführt werden, so dass das erste Lagerelement 8 von dem Rollenherdofen 1 demontierbar ist. Zur Demontage wird zwischen dem zweiten Rollenhandhabungselement 46 und dem Handhabungselement 40 des ersten Lagerelements 8 der zu demontierenden Tragrolle 2 die formschlüssige Verbindung hergestellt. Bevor die Tragrolle 2 aus dem Rollenherdofen 1 herausgezogen wird, wird der Rollenherdofen 1 auf eine Temperatur von maximal 800°C gefahren und mit Stickstoff gespült. Ferner werden aus Sicherheitsgründen alle Tragrollen 2 des Rollenherdofens 1 alle 15 Sekunden in Rotation gebracht, wobei bei der zu demontierenden Tragrolle 2 dazu die angetriebene Andrückrolle 48 vorgesehen ist. Beim Ineingriffbringen von Handhabungselement 40 und zweitem Rollenhandhabungselement 46 wird das angetriebene erste Längsende 12 der zu demontierenden Tragrolle 2 von dem ersten Rollenhandhabungselement 45 soweit vertikal nach unten gedrückt, bis das zweite Längsende 13 der zu demontierenden Tragrolle 2 vom zweiten Lagerelement 10 nur noch kraftlos geführt wird. Anschließend wird die Tragrollenhandhabungsvorrichtung 15 von dem Rollenherdofen 1 weg bewegt, so dass dadurch die zu demontierende Tragrolle 2 aus dem Rollenherdofen 1 herausgezogen wird. Die aus dem Rollenherdofen 1 herausgezogene Tragrolle 2 wird dann von der Tragrollenhandhabungsvorrichtung 15 entfernt, wobei die Tragrolle 2 mitsamt ihrem ersten Lagerelement 8 demontiert wird. Die Tragrollenhandhabungsvorrichtung 15 wird anschließend mit einer zu montierenden Tragrolle 2, die mit einem neuen ersten Lagerelement 8 versehen ist, bestückt. Beim Bestücken wird zwischen dem zweiten Rollenhandhabungselement 46 und dem wenigstens einen Handhabungselement 40 des ersten Lagerelements 8 der zu montierenden Tragrolle 2 wiederum eine formschlüssige Verbindung hergestellt, wobei durch das erste Rollenhandhabungselement 45 das erste Längsende 12 der zu montierenden Tragrolle 2 niedergedrückt wird. Die Tragrollenhandhabungsvorrichtung 15 wird dann wieder zu dem Rollenherdofen 1 hin bewegt und die zu montierende Tragrolle 2 wird dabei in den Rollenherdofen 1 eingebracht.

Alternativ kann die Tragrollenhandhabungsvorrichtung 15, welche die zu demontierende Tragrolle 2 und deren erstes Lagerelement 8 von dem Rollenherdofen 1 demontiert hat, seitlich zum Rollenherdofen 1 verfahren werden. Eine weitere Tragrollenhandhabungsvorrichtung 15', die mit einer zu montierenden Tragrolle 2 mitsamt eines neues ersten Lagerelements 8 bestückt ist, kann seitlich des Rollenherdofens 1 an die Position der zu montierenden Tragrolle 2 heran gefahren werden, wobei beim Bestücken zwischen dem zweiten Rollenhandhabungselement 46 und dem Handhabungselement 40 des ersten Lagerelements 8 der zu montierenden Tragrolle 2 die formschlüssige Verbindung hergestellt wird und durch das erste Rollenhandhabungselement 45 das erste Längsende 12 der zu montierenden Tragrolle 2 niedergedrückt wird, um die Tragrolle 2 im Wesentlichen waagereicht in den Rollenherdofen 1 einzubringen.

Zusammenfassend ist die vorliegende Erfindung sowohl auf das Tragrollenlagerungssystem 3 als auch auf die zum Wechsel von Tragrollen 2 des Tragrollenlagerungssystems 3 bestimmte Tragrollenhandhabungsvorrichtung 15 gerichtet. Das erfindungsgemäße Tragrollenlagerungssystem 3 umfasst das erste Lagerelement 8, das zweite Lagerelement 10 und die Tragrolle 2, von deren ersten Längsende 12 aus sich der angetriebene Wellenzapfen 14 erstreckt. Zum Tragrollenwechsel wird die Tragrolle 2 mitsamt dem ersten Lagerelement 8 demontiert und durch eine neue Tragrolle 2 mit einem neuen ersten Lagerelement 8 ersetzt. Die Tragrolle 2 und ihr erstes Lagerelement 8 bilden die auszutauschenden Bauteile und werden sowohl bei Demontage als auch bei Montage als eine zusammenhängende und fest verbundene Einheit gewechselt. Zum Tragrollenwechsel weist das erste Lagerelement 8 das zur Handhabung der Tragrolle 2 dienende Handhabungselement 40 auf. Das Handhabungselement 40 ist zapfenförmig ausgebildet und derart kompatibel zu der erfindungsgemäßen Tragrollenhandhabungsvorrichtung 3 ausgebildet, dass das Handhabungselement 40 mit der Tragrollenhandhabungsvorrichtung 3 mechanisch koppelbar und formschlüssig verbindbar ist, um die Tragrolle 2 mitsamt dem ersten Lagerelement 8 aus dem Rollenherdofen 1 herauszuziehen oder um die Tragrolle 2 mitsamt dem ersten Lagerelement 8 in den Rollenherdofen 1 einzubringen. Dabei weist die erfindungsgemäße Tragrollenhandhabungsvorrichtung 15 den rahmenartigen Basisträger 42, den an dem Basisträger 42 schwenkbeweglich angebrachten und ebenfalls rahmenförmigen Schwenkträger 44 und das erste Rollenhandhabungselement 45 auf. Der Schwenkträger 44 ist um den ortsfesten Drehpunkt 51 relativ zum Basisträger 42 schwenkbar, wobei an dem Basisträger 42 das zweite Rollenhandhabungselement 46 angebracht ist, welches zwischen einer Handhabungsposition, in welcher das zweite Rollenhandhabungselement 46 zum Tragrollenwechsel mit der Tragrolle 2 mechanisch koppelbar und formschlüssig verbindbar ist, und einer Freigabeposition verstellbar ausgebildet ist. Mit Hilfe der Rollenhandhabungselemente 45, 46 wird die Bewegung der zu montierenden oder zu demontierenden Tragrolle 2 geführt, wobei die Tragrollenhandhabungsvorrichtung die gesamte Last der Tragrolle 2 aufnimmt. Eine Verschwenkung des Schwenkträgers 44 relativ zu dem Basisträger 42 führt dazu, dass zusätzlich das erste Rollenhandhabungselement 45 relativ zu dem zweiten Rollenhandhabungselement 46 verschwenkt wird, wobei das zweite Rollenhandhabungselement 46 ortsfest an dem Basisträger 42 angebracht ist und in dem Drehpunkt 51 angeordnet ist.

Der Fachmann wird erkennen, dass die Tragrollenhandhabungsvorrichtung 15', wenn sie in einem gegenüber der äußeren Umgebung abgedichteten Gehäuse 16 verfahrbar angeordnet ist, schon vor Beginn der gesamten Aktion des Tragrollenwechsels mit einer neuen Tragrolle 2 zu bestücken ist, weil mit dem Andocken des Gehäuses 16 an den Rollenherdofen 1 und vor dem Ausbau der ersten Tragrolle 2 zunächst einmal die Atmosphäre zu wechseln ist. Das Gehäuse 16 der Tragrollenhandhabungsvorrichtung kann nach diesem Vorgang nicht mehr geöffnet werden, es sei denn, man bricht den Rollenwechselvorgang ab.

Ebenso wird der Fachmann erkennen, dass bei einem Tragrollenwechsel mit einem gegenüber der äußeren Umgebung abgedichteten Gehäuse 16 die Tragrollen während dem Ausfahren aus dem Ofen und auch beim Einfahren in den Ofen dauernd bzw. permanent drehen müssen, denn an der Tragrolle befindet sich das konische Stück 23. Das konische Stück 23 dient dazu, dass beim Ausfahren das Produktionsband leicht angehoben wird und die Rolle unter dem Band herfahren kann, ohne das Band dabei zu verreißen. Gleiches gilt für das Einfahren der neuen Tragrolle. Da die alte Tragrolle aus dem Ofen gezogen wurde, hängt das Produktionsband nun aufgrund des größeren Rollenabstands tiefer durch. Die neu einzufahrende Tragrolle kann nun beim Einfahren mit dem zweiten Längsende 13 unter das Band fahren und mit dem konischen Stück 23 wird das Band höher angehoben und so wird verhindert, dass das Produktionsband verrissen wird. Jedoch muss die Tragrolle dabei immer drehen bzw. in Drehung sein.

Die vorstehend beschriebene Erfindung ist selbstverständlich nicht auf die beschriebenen und dargestellten Ausführungsformen beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von dem konkreten Ausführungsbeispiel für den Fachmann naheliegt.

## Patentansprüche

1. Tragrollenlagerungssystem (3) einer Tragrolle (2) eines Rollenherdofens (1), aufweisend:
ein erstes Lagerelement (8), welches auf einer ersten Seitenwand (9) des Rollenherdofens (1) anbringbar ist,
ein zweites Lagerelement (10), welches auf einer der ersten Seitenwand (9) gegenüberliegenden, zweiten Seitenwand (11) anbringbar ist,
eine Tragrolle (2), die mit ihrem ersten Längsende (12) mittels des ersten Lagerelements (8) und mit ihrem zweiten Längsende (13) mittels des zweiten Lagerelements (10) drehbar im Rollenherdofen (1) lagerbar ist,
wobei sich von dem ersten Längsende (12) der Tragrolle (2) aus ein Wellenzapfen (14) erstreckt, der aus dem ersten Lagerelement (8) nach außen hin hervorsteht und mit einer Antriebseinheit (7) antriebsverbindbar ist,
**dadurch gekennzeichnet, dass**
das erste Lagerelement (8) ein Festlager (35) aufweist und dass das zweite Lagerelement (10) ein Loslager (28) aufweist,
wobei das erste Lagerelement (8) wenigstens ein zur Handhabung der Tragrolle (2) dienendes Handhabungselement (40) aufweist, welches zum Wechsel einer Tragrolle (2) mit einer Tragrollenhandhabungsvorrichtung (15) mechanisch koppelbar und formschlüssig verbindbar ist, um die Tragrolle (2) mitsamt dem ersten Lagerelement (8) aus dem Rollenherdofen (1) herauszuziehen oder um die Tragrolle (2) mitsamt dem ersten Lagerelement (8) in den Rollenherdofen (1) einzubringen.

2. Tragrollenlagerungssystem (3) nach Anspruch 1, **dadurch gekennzeichnet, dass** das wenigstens eine Handhabungselement (40) außenseitig an dem ersten Lagerelement (8) angeformte zapfenförmige Koppelelemente (41) umfasst.

3. Tragrollenlagerungssystem (3) nach einem der vorhergehenden Ansprüche, **dadurch gekennzeichnet, dass** sich die Tragrolle (2) durch jeweilige Dichtstopfen (18, 19) hindurch erstreckt, die jeweils in einer jeweiligen Durchtrittsöffnung (20, 21) einer zugeordneten Seitenwand (9, 11) des Rollenherdofens (1) angeordnet sind.

4. Tragrollenlagerungssystem (3) nach Anspruch 3, **dadurch gekennzeichnet, dass** ein jeweiliger Dichtstopfen (18, 19) mit konischen Durchtrittsöffnungen (24, 25) ausgebildet ist und die Tragrolle (2) konische Abschnitte (22, 23) aufweist, durch welche sich der Querschnitt der Tragrolle (2) zu den jeweiligen Längsenden (12, 13) hin verjüngt, wobei die konischen Abschnitte (22, 23) wenigstens abschnittsweise in den zugeordneten Dichtstopfen (18, 19) angeordnet sind.

5. Tragrollenlagerungssystem (3) nach einem der vorhergehenden Ansprüche, **dadurch gekennzeichnet, dass** das zweite Lagerelement (10) ein Sichtfenster (26) zur visuellen Überwachung eines Tragrollenwechsels aufweist.

6. Tragrollenlagerungssystem (3) nach Anspruch 5, **dadurch gekennzeichnet, dass** an dem Sichtfenster (26) des zweiten Lagerelements (10) eine Überwachungskamera (27) zur visuellen Überwachung eines Tragrollenwechsels demontierbar angebracht ist.

7. Tragrollenlagerungssystem (3) nach einem der vorhergehenden Ansprüche, **dadurch gekennzeichnet, dass** das zweite Lagerelement (10) eine drehbar gelagerte Lagerhülse (29) aufweist, die mit dem zweiten Längsende (13) der Tragrolle (2) über eine drehfeste Verbindung (30), die lösbar ausgebildet ist, verbunden ist.

8. Tragrollenlagerungssystem (3) nach Anspruch 7, **dadurch gekennzeichnet, dass** die drehfeste Verbindung (30) von Lagerhülse (29) und zweitem Längsende (13) der Tragrolle (2) wenigstens ein federndes Druckstück (31), das an der Lagerhülse (29) befestigt ist, und zumindest eine in dem zweiten Längsende (13) der Tragrolle (2) ausgeformte Nut (32) umfasst, wobei zur Ausbildung der drehfesten Verbindung (30) das wenigstens eine federnde Druckstück (31) in die zumindest eine Nut (32) einrastet.

9. Tragrollenhandhabungsvorrichtung (15) zum Wechseln einer mit einem Tragrollenlagerungssystem (3) nach einem der Ansprüche 1 bis 8 gelagerten Tragrolle (2) eines Rollenherdofens (1), aufweisend:
einen Basisträger (42),
einen an dem Basisträger (42) angebrachten Schwenkträger (44) und
ein erstes Rollenhandhabungselement (45), welches an dem Schwenkträger (44) angebracht ist und eine Tragrolle (2) anheben kann,
**dadurch gekennzeichnet, dass**
der Schwenkträger (44) um einen ortsfesten Drehpunkt (51) relativ zum Basisträger (42) schwenkbar an dem Basisträger (42) angebracht ist, wobei an dem Basisträger (42) ein zur Handhabung einer Tragrolle (2) dienendes zweites Rollenhandhabungselement (46) angebracht ist, welches zwischen einer Handhabungsposition, in welcher das zweite Rollenhandhabungselement (46) zum Tragrollenwechsel mit der Tragrolle (2) mechanisch koppelbar und formschlüssig verbindbar ist, und einer Freigabeposition, in welcher die mechanische Kopplung und formschlüssige Verbindung zwischen Tragrolle (2) und dem zweiten Rollenhandhabungselement (46) freigegeben ist, verstellbar ausgebildet ist.

10. Tragrollenhandhabungsvorrichtung (15) nach Anspruch 9, **dadurch gekennzeichnet, dass** das zweite Rollenhandhabungselement (46) als ein an einem ersten Lagerelement (8) einer handzuhabende Tragrolle (2) anordenbarer Drehpunkt (51) für die handzuhabende Tragrolle (2) ausgebildet ist und dass das erste Rollenhandhabungselement (45) als ein auf die handzuhabende Tragrolle (2) drückender und dadurch die handzuhabende Tragrolle (2) um den von dem zweiten Rollenhandhabungselement (46) ausgebildeten Drehpunkt (51) verschwenkender Niederhalter ausgebildet ist.

11. Tragrollenhandhabungsvorrichtung (15) nach Anspruch 9 oder 10, **dadurch gekennzeichnet, dass** das erste Rollenhandhabungselement (45) wenigstens zwei Andrückrollen (47, 48) umfasst, durch die bei Handhabung einer Tragrolle (2) ein erstes Längsende (12) der handzuhabenden Tragrolle (2) niederdrückbar oder niederhaltbar ist.

12. Tragrollenhandhabungsvorrichtung (15) nach Anspruch 11, **dadurch gekennzeichnet, dass** wenigstens eine der beiden Andrückrollen (47, 48) eine angetriebene Treibrolle ist.

13. Tragrollenhandhabungsvorrichtung (15) nach wenigstens einem der Ansprüche 9 bis 12, **dadurch gekennzeichnet, dass** eine Höhenverstellvorrichtung (54), durch die der Schwenkträger (44) um den ortsfesten Drehpunkt (51) verschwenkbar ist, den Schwenkträger (44) an dem Basisträger (42) abstützt.

14. Tragrollenhandhabungsvorrichtung (15) nach wenigstens einem der Ansprüche 9 bis 13, **dadurch gekennzeichnet, dass** das zweite Rollenhandhabungselement (46) wenigstens ein U-förmiges Arretierelement (50) aufweist, welches in der Handhabungsposition mit einem zapfenförmigen Koppelelement (41) einer Tragrolle (2) formschlüssig verbindbar ausgebildet ist.

15. Tragrollenhandhabungsvorrichtung (15) nach wenigstens einem der Ansprüche 9 bis 14, **dadurch gekennzeichnet, dass** ein Drehmechanismus (53), den ein Verstellantrieb (52) antreibt, das zweite Rollenhandhabungselement (46) zwischen der Freigabeposition und der Handhabungsposition verstellt.

16. Tragrollenhandhabungsvorrichtung (15, 15') nach wenigstens einem der Ansprüche 9 bis 15, **dadurch gekennzeichnet, dass** die Tragrollenhandhabungsvorrichtung (15, 15') in einem gegenüber der äußeren Umgebung abgedichteten Gehäuse (16) verfahrbar angeordnet ist und wenigstens zum Teil durch eine am Gehäuse (16) ausgebildete Schleuse (17) aus dem Gehäuse (16) ausfahrbar ausgebildet ist.

17. Verfahren zum Austausch von Tragrollen (2) eines Rollenherdofens (1), der ein Tragrollenlagerungssystem (3) nach einem der Ansprüche 1 bis 8 aufweist, mit Hilfe einer Tragrollenhandhabungsvorrichtung (15, 15') nach einem der Ansprüche 9 bis 16, wobei die Tragrollenhandhabungsvorrichtung (15, 15') seitlich neben dem Rollenherdofen (1) an die Position der zu demontierenden Tragrolle (2) gefahren wird, der Wellenzapfen (14) der zu demontierenden Tragrolle (2) von einer Antriebseinheit (7) entkoppelt wird, dann die Tragrollenhandhabungsvorrichtung (15, 15') an die zu demontierende Tragrolle (2) herangefahren wird und dann eine Befestigung des ersten Lagerelements (8) vom Rollenherdofen (1) gelöst wird,
**dadurch gekennzeichnet, dass**
zwischen dem zweiten Rollenhandhabungselement (46) und dem wenigstens einen Handhabungselement (40) des ersten Lagerelements (8) der zu demontierenden Tragrolle (2) eine formschlüssige Verbindung hergestellt wird und die Tragrollenhandhabungsvorrichtung (15, 15') anschließend von dem Rollenherdofen (1) weg bewegt wird, so dass dadurch die zu demontierende Tragrolle (2) aus dem Rollenherdofen (1) herausgezogen wird.

18. Verfahren nach Anspruch 17, **dadurch gekennzeichnet, dass** beim Ineingriffbringen von Handhabungselement (40) und zweitem Rollenhandhabungselement (46) das angetriebene erste Längsende (12) der zu demontierenden Tragrolle (2) von dem ersten Rollenhandhabungselement (45) soweit vertikal nach unten gedrückt wird, bis das zweite Längsende (13) der zu demontierenden Tragrolle (2) vom zweiten Lagerelement (10) nur noch kraftlos geführt wird.

19. Verfahren nach Anspruch 17 oder 18, **dadurch gekennzeichnet, dass** die aus dem Rollenherdofen (1) herausgezogene Tragrolle (2) von der Tragrollenhandhabungsvorrichtung (15') entfernt wird und die Tragrollenhandhabungsvorrichtung (15') mit einer zu montierenden Tragrolle (2) bestückt wird, wobei beim Bestücken zwischen dem zweiten Rollenhandhabungselement (46) und dem wenigstens einen Handhabungselement (40) des ersten Lagerelements (8) der zu montierenden Tragrolle (2) eine formschlüssige Verbindung hergestellt wird und durch das erste Rollenhandhabungselement (45) das erste Längsende (12) der zu montierenden Tragrolle (2) niedergedrückt wird, wobei die Tragrollenhandhabungsvorrichtung (15) dann wieder zu dem Rollenherdofen (1) hin bewegt wird und die zu montierende Tragrolle (2) dabei in den Rollenherdofen (1) eingebracht wird.

20. Verfahren nach Anspruch 17 oder 18, **dadurch gekennzeichnet, dass** die Tragrollenhandhabungsvorrichtung (15), welche die zu demontierende Tragrolle (2) aus dem Rollenherdofen (1) herausgezogen hat, seitlich zum Rollenherdofen (1) verfahren wird und eine weitere Tragrollenhandhabungsvorrichtung (15'), die mit einer zu montierenden Tragrolle (2) bestückt ist, seitlich des Rollenherdofens (1) an die Position der zu montierenden Tragrolle (2) heran gefahren wird, wobei beim Bestücken zwischen dem zweiten Rollenhandhabungselement (46) und dem wenigstens einen Handhabungselement (40) des ersten Lagerelements (8) der zu montierenden Tragrolle (2) eine formschlüssige Verbindung hergestellt wird und durch das erste Rollenhandhabungselement (45) das erste Längsende (12) der zu montierenden Tragrolle (2) niedergedrückt wird.

21. Verfahren nach einem der Ansprüche 17 bis 20, **dadurch gekennzeichnet, dass** vor dem Herausziehen der zu demontierenden Tragrolle (2) aus dem Rollenherdofen (1) der Rollenherdofen (1) mit Stickstoff gespült wird und/oder die Temperatur im Inneren des Rollenherdofens (1) auf zumindest 850°C, vorzugsweise 800°C, abgesenkt wird.

22. Verfahren nach Anspruch 21, **dadurch gekennzeichnet, dass** die Tragrollenhandhabungsvorrichtung (15) in einem gegenüber der äußeren Umgebung abgedichteten Gehäuse (16) bewegt wird, um die zu demontierende Tragrolle (2) aus dem Rollenherdofen (1) herauszuziehen, wobei vor dem Herausziehen der zu demontierenden Tragrolle (2) aus dem Rollenherdofen (1) eine Schleuse (17) des Gehäuses (16) gasdicht an eine Durchtrittöffnung (20) des Rollenherdofens (1) angedockt wird und anschließend das innere des Gehäuses (16) mit Stickstoff gespült wird.

## Claims

1. A support roller bearing system (3) of a support roller (2) of a roller hearth furnace (1), with:
a first bearing element (8) which can be attached to a first side wall (9) of the roller hearth furnace (1),
a second bearing element (10) which can be attached to a second sidewall (11) located opposite the first side wall (9),
a support roller (2) which is rotatably mountable in the roller hearth furnace (1) with its first longitudinal end (12) by means of the first bearing element (8) and with its second longitudinal end (13) by means of the second bearing element (10),
wherein a shaft pin (14) extends out from the first longitudinal end (12) of the support roller (2), which protrudes outwards from the first bearing element (8) and can be connected with a drive unit (7),
**characterised in that**
the first bearing element (8) has a fixed bearing (35) and the second bearing element (10) has a floating bearing (28),
wherein the first bearing element (8) has at least one handling element (40) for facilitating the handling of the support roller (2), which can be mechanically coupled and connected in a positively locking manner to a support roller (2) handling device (15) in order to withdraw a support roller (2) together with the first bearing element (8) from the roller hearth furnace (1), or to introduce the support roller (2) together with the first bearing element (8) into the roller hearth furnace (1).

2. The support roller bearing system (3) according to claim 1, **characterised in that** the at least one handling element (40) comprises pin-shaped coupling elements (41) integrally formed on the outside of the first bearing element (8).

3. The support roller bearing system (3) according to one of the preceding claims, **characterised in that** the support roller (2) extends through respective sealing plugs (18, 19) which are each arranged in a respective through opening (20, 21) of an associated side wall (9, 11) of the roller hearth furnace (1).

4. The support roller bearing system (3) according to claim 3, **characterised in that** a respective sealing plug (18, 19) is formed with conical through openings (24, 25) and the support roller (2) has conical sections (22, 23) through which the cross-section of the support roller (2) tapers towards the respective longitudinal ends (12, 13), wherein the conical sections (22, 23) are arranged, at least in sections, in the allocated sealing plugs (18, 19).

5. The support roller bearing system (3) according to one of the preceding claims, **characterised in that** the second bearing element (10) has a viewing window (26) for visual monitoring of a support roller changeover.

6. The support roller bearing system (3) according to claim 5, **characterised in that** a surveillance camera (27) is removeably attached to the viewing window (26) of the second bearing element (10) in order to visually monitor a support roller changeover.

7. The support roller bearing system (3) according to one of the preceding claims, **characterised in that** the second bearing element (10) has a rotatably mounted bearing sleeve (29), which is connected to the second longitudinal end (13) of the support roller (2) by a non-rotatable connection (30) which is detachable.

8. The support roller bearing system (3) according to claim 7, **characterised in that** the non-rotatable connection (30) of the bearing sleeve (29) and second longitudinal end (13) of the support roller (2) comprise at least one sprung pressure component (31) which is fixed to the bearing sleeve (29), and at least one groove (32) formed in the second longitudinal end (13) of the support roller (2), wherein the at least one sprung pressure component (31) locks into the at least one groove (32).

9. A support roller handling device (15) for changing a support roller (2) mounted in a support roller bearing system (3) of a roller hearth furnace (1), according to claims 1 to 8, with:
a base support (42),
a swivel support (44) attached to the base support (42) and
a first roller handling element (45) which is attached to the swivel support (44) and can lift a support roller (2),
**characterised in that**
the swivel support (44) is attached to the base support (42) so that it can swivel around a stationary pivot point (51) relative to the base support (42), wherein a second roller handling element (46) for handling a support roller (2) is attached to the base support (42), which can be adjusted between a handling position, in which the second roller handling element (46) can be mechanically coupled and connected in a positively locking manner to the support roller (2) for a support roller changeover, and a release position, in which the mechanical coupling and positively locking connection between the support roller (2) and the second roller handling element (46) is released.

10. The support roller handling device (15) according to claim 9, **characterised in that** the second roller handling element (46) is formed as a pivot point (51) for the support roller (2) to be handled, which can be arranged on a first bearing element (8) of a support roller (2) to be handled, and that the first roller handling element (45) is formed as a holding-down device pressing on the support roller (2) to be handled, and thereby swivelling around the pivot point (51) formed by the second roller handling element (46).

11. The support roller handling device (15) according to claim 9 or 10, **characterised in that** the first roller handling element (45) comprises at least two pressure rollers (47, 48), by which, when handling a support roller (2), a first longitudinal end (12) of the support roller (2) to be handled can be pressed or held down.

12. The support roller handling device (15) according to claim 11, **characterised in that** at least one of the two pressure rollers (47, 48) is a driven drive roller.

13. The support roller handling device (15) according to at least one of the claims 9 to 12, **characterised in that** a height adjustment device (54), by means of which the swivel support (44) can pivot around the stationary pivot point (51), supports the swivel support (44) on the base support (42).

14. The support roller handling device (15) according to at least one of the claims 9 to 13, **characterised in that** the second roller handling element (46) has at least one U-shaped locking element (50), which is formed so that in the handling position it is connectable, in a positively locking manner, to a pin-shaped coupling element (41) of a support roller (2).

15. The support roller handling device (15) according to at least one of the claims 9 to 14, **characterised in that** a rotation mechanism (53), which drives an adjusting drive (52), adjusts the second roller handling element (46) between the release position and the handling position.

16. The support roller handling device (15, 15') according to at least one of the claims 9 to 15, **characterised in that** the support roller handling device (15, 15') is moveably arranged in a housing (16) which is sealed against the outer environment, and is at least partially formed so as to be moveable out of the housing (16) through an air lock (17) formed on the housing (16).

17. A method for changing the support rollers (2) of a roller hearth furnace (1) which has a support roller bearing system (3) according to one of claims 1 to 8, with the help of a support roller handling device (15, 15') according to one of claims 9 to 16, wherein the support roller handling device (15, 15') is driven laterally adjacent to the roller hearth furnace (1) at the position of the support roller (2) to be removed, the shaft pin (14) of the support roller (2) to be removed is decoupled from a drive unit (7), the support roller handling device (15, 15') is then moved close to the support roller (2) to be removed and a fixing of the first bearing element (8) is then released from the roller hearth furnace (1),
**characterised in that**
a positively locking connection is created between the second roller handling element (46) and the at least one handling element (40) of the first bearing element (8) of the support roller (2) to be removed, and the support roller handling device (15, 15') is subsequently moved away from the roller hearth furnace (1), so that the support roller (2) to be removed is thereby withdrawn from the roller hearth furnace (1).

18. The method according to claim 17, **characterised in that** when the handling element (40) and the second roller handling element (46) are engaged, the powered first longitudinal end (12) of the support roller (2) to be removed is pressed vertically downwards by the first roller handling element (45) until the second longitudinal end (13) of the support roller (2) to be removed is only being guided without power by the second bearing element (10).

19. The method according to claim 17 or 18, **characterised in that** the support roller (2) which has been withdrawn from the roller hearth furnace (1) is removed from the support roller handling device (15') and the support roller handling device (15') is loaded with a support roller (2) to be fitted, wherein, in the process of loading, a positively locking connection is created between the second roller handling element (46) and the at least one handling element (40) of the first bearing element (8) of the support roller (2) to be fitted, and the first longitudinal end (12) of the support roller (2) to be fitted is pressed downwards by the first roller handling element (45), wherein the support roller handling device (15) is then moved towards the roller hearth furnace (1) again and the support roller (2) to be fitted is thus introduced into the roller hearth furnace (1).

20. The method according to claim 17 or 18, **characterised in that** the support roller handling device (15), which withdrew the support roller (2) to be removed from the roller hearth furnace (1) is moved laterally towards the roller hearth furnace (1) and a further support roller handling device (15') which is loaded with a support roller (2) to be fitted, is moved laterally towards the roller hearth furnace (1) to the position of the support roller (2) to be fitted, wherein, in the process of loading, a positively locking connection is created between the second roller handling element (46) and the at least one handling element (40) of the first bearing element (8) of the support roller (2) to be fitted, and the first longitudinal end (12) of the support roller (2) to be fitted is pressed down by the first roller handling element (45).

21. The method according to one of claims 17 to 20, **characterised in that**, before withdrawal of the support roller (2) to be removed from the rolling hearth furnace (1), the rolling hearth furnace (1) is rinsed with nitrogen and/or the temperature inside the rolling hearth furnace (1) is lowered to at least 850°C, preferably 800°C.

22. The method according to claim 21, **characterised in that**, the support roller handling device (15) is moved inside a housing (16), which is sealed against the outer environment, in order to withdraw the support roller (2) to be removed from the rolling hearth furnace (1), wherein before withdrawal of the support roller (2) to be removed from the rolling hearth furnace (1), an air lock (17) in the housing (16) is docked in a gas-tight manner to a through opening (20) of the rolling hearth furnace (1) and the inside of the housing (16) is subsequently rinsed with nitrogen.

## Revendications

1. Système de support de rouleau porteur (3) d'un rouleau porteur (2) d'un four à rouleaux (1), présentant :
un premier élément de palier (8) pouvant être monté sur une première paroi latérale (9) du four à rouleaux (1),
un deuxième élément de palier (10) pouvant être monté sur une deuxième paroi latérale (11) située en vis-à-vis de la première paroi latérale (9),
un rouleau porteur (2) pouvant être supporté avec sa première extrémité longitudinale (12) au moyen du premier élément de palier (8) et avec sa deuxième extrémité longitudinale (13) au moyen du deuxième élément de palier (10) de façon rotative dans le four à rouleaux (1),
dans lequel un tourillon d'arbre (14) s'étend à partir de la première extrémité longitudinale (12) du rouleau porteur (2), lequel tourillon d'arbre dépasse vers l'extérieur à partir du premier élément de palier (8) et peut être relié par entraînement à une unité d'entraînement (7),
**caractérisé en ce que**
le premier élément de palier (8) présente un palier fixe (35) et le deuxième élément de palier (10) présente un palier libre (28),
dans lequel le premier élément de palier (8) présente au moins un élément de manipulation (40) pour la manipulation du rouleau porteur (2), lequel, pour changer un rouleau porteur (2), peut être couplé mécaniquement et relié par conjugaison de formes avec un dispositif de manipulation de rouleau porteur (15) pour retirer le rouleau porteur (2), ensemble avec le premier élément de palier (8), du four à rouleaux (1) ou pour introduire le rouleau porteur (2), ensemble avec le premier élément de palier (8), dans le four à rouleaux (1).

2. Système de support de rouleau porteur (3) selon la revendication 1, **caractérisé en ce que** l'au moins un élément de manipulation (40) comprend des éléments de couplage (41) en forme de tétons formés extérieurement sur le premier élément de palier (8).

3. Système de support de rouleau porteur (3) selon l'une des revendications précédentes, **caractérisé en ce que** le rouleau porteur (2) s'étend à travers des bouchons d'étanchéité (18, 19) respectifs qui sont respectivement disposés dans une ouverture de passage (20, 21) respective d'une paroi latérale (9, 11) associée du four à rouleaux (1).

4. Système de support de rouleau porteur (3) selon la revendication 3, **caractérisé en ce qu'**un bouchon d'étanchéité (18, 19) respectif est réalisé avec des ouvertures de passage coniques (24, 25) et le rouleau porteur (2) présente des parties coniques (22, 23) grâce auxquelles la section transversale du rouleau porteur (2) s'amenuise vers les extrémités longitudinales (12, 13) respectives, dans lequel les parties coniques (22, 23) sont disposées au moins partiellement dans les bouchons d'étanchéité (18, 19) associés.

5. Système de support de rouleau porteur (3) selon l'une des revendications précédentes, **caractérisé en ce que** le deuxième élément de palier (10) présente un hublot (26) pour la surveillance visuelle d'un changement de rouleau porteur.

6. Système de support de rouleau porteur (3) selon la revendication 5, **caractérisé en ce qu'**une caméra de surveillance (27) est montée de façon démontable au niveau du hublot (26) du deuxième élément de palier (10) pour la surveillance visuelle d'un changement de rouleau porteur.

7. Système de support de rouleau porteur (3) selon l'une des revendications précédentes, **caractérisé en ce que** le deuxième élément de palier (10) présente un manchon de palier (29) supporté de façon rotative qui est relié à la deuxième extrémité longitudinale (13) du rouleau porteur (2) via une liaison solidaire en rotation (30) réalisée de manière détachable.

8. Système de support de rouleau porteur (3) selon la revendication 7, **caractérisé en ce que** la liaison solidaire en rotation (30) entre le manchon de palier (29) et la deuxième extrémité longitudinale (13) du rouleau porteur (2) comprend au moins une pièce de pression (31) élastique fixée sur le manchon de palier (29) et au moins une rainure (32) formée dans la deuxième extrémité longitudinale (13) du rouleau porteur (2), dans lequel, pour la réalisation de la liaison solidaire en rotation (30), l'au moins une pièce de pression élastique (31) se met en prise dans l'au moins une rainure (32).

9. Dispositif de manipulation de rouleau porteur (15) pour changer un rouleau porteur (2) supporté avec un système de support de rouleau porteur (3) selon l'une des revendications 1 à 8 d'un four à rouleaux(1), présentant :
un support de base (42),
un support pivotant (44) monté sur le support de base (42), et
un premier élément de manipulation de rouleau (45) monté sur le support pivotant (44) et pouvant soulever un rouleau porteur (2),
**caractérisé en ce que**
le support pivotant (44) est monté sur le support de base (42), de façon pivotante autour d'un pivot stationnaire (51) par rapport au support de base (42), dans lequel un deuxième élément de manipulation de rouleau (46) servant à la manipulation d'un rouleau porteur (2) est monté sur le support de base (42), lequel est réalisé de manière déplaçable entre une position de manipulation dans laquelle le deuxième élément de manipulation de rouleau (46) peut être couplé mécaniquement et relié par conjugaison de formes avec le rouleau porteur (2) pour le changement de rouleau porteur, et une position de libération dans laquelle on défait le couplage mécanique et la liaison par conjugaison de formes entre le rouleau porteur (2) et le deuxième élément de manipulation de rouleau (46).

10. Dispositif de manipulation de rouleau porteur (15) selon la revendication 9, **caractérisé en ce que** le deuxième élément de manipulation de rouleau (46) est réalisé en tant que pivot (51) pouvant être disposé sur un premier élément de palier (8) d'un rouleau porteur (2) à manipuler pour le rouleau porteur (2) à manipuler et le premier élément de manipulation de rouleau (45) est réalisé en tant que serre-flanc appuyant sur le rouleau porteur (2) à manipuler et faisant ainsi pivoter le rouleau porteur (2) à manipuler autour du pivot (51) réalisé par le deuxième élément de manipulation de rouleau (46).

11. Dispositif de manipulation de rouleau porteur (15) selon la revendication 9 ou 10, **caractérisé en ce que** le premier élément de manipulation de rouleau (45) comprend au moins deux rouleaux presseurs (47, 48) grâce auxquels, en cas de manipulation d'un rouleau porteur (2), une première extrémité longitudinale (12) du rouleau porteur (2) à manipuler peut être pressée vers le bas ou maintenue vers le bas.

12. Dispositif de manipulation de rouleau porteur (15) selon la revendication 11, **caractérisé en ce qu'**au moins l'un des deux rouleaux presseurs (47, 48) est une poulie motrice entraînée.

13. Dispositif de manipulation de rouleau porteur (15) selon l'une au moins des revendications 9 à 12, **caractérisé en ce qu'**un dispositif de réglage en hauteur (54), grâce auquel le support pivotant (44) peut pivoter autour du pivot stationnaire (51), supporte le support pivotant (44) sur le support de base (42).

14. Dispositif de manipulation de rouleau porteur (15) selon l'une au moins des revendications 9 à 13, **caractérisé en ce que** le deuxième élément de manipulation de rouleau (46) présente au moins un élément d'arrêt en forme de U (50) lequel, dans la position de manipulation, est réalisé de manière à pouvoir être relié par conjugaison de formes à un élément de couplage (41) en forme de téton d'un rouleau porteur (2).

15. Dispositif de manipulation de rouleau porteur (15) selon l'une au moins des revendications 9 à 14, **caractérisé en ce qu'**un mécanisme de rotation (53), lequel est entraîné par un mécanisme de déplacement (52), déplace le deuxième élément de manipulation de rouleau (46) entre la position de libération et la position de manipulation.

16. Dispositif de manipulation de rouleau porteur (15, 15') selon l'une au moins des revendications 9 à 15, **caractérisé en ce que** le dispositif de manipulation de rouleau porteur (15, 15') est disposé de manière déplaçable dans un logement (16) rendu étanche par rapport à l'environnement extérieur et est réalisé de manière à pouvoir au moins partiellement sortir du logement (16) grâce à un sas (17) formé au niveau du logement (16).

17. Procédé pour échanger des rouleaux porteurs (2) d'un four à rouleaux (1), qui présente un système de support de rouleau porteur (3) selon l'une des revendications 1 à 8, à l'aide d'un dispositif de manipulation de rouleau porteur (15, 15') selon l'une des revendications 9 à 16, dans lequel le dispositif de manipulation de rouleau porteur (15, 15') est conduit latéralement à côté du four à rouleaux (1) vers la position du rouleau porteur (2) à démonter, le tourillon d'arbre (14) du rouleau porteur (2) à démonter est désaccouplé d'une unité d'entraînement (7), le dispositif de manipulation de rouleau porteur (15, 15') est ensuite rapproché du rouleau porteur (2) démonté et une fixation du premier élément de palier (8) est ensuite détachée du four à rouleaux (1),
**caractérisé en ce que**,
entre le deuxième élément de manipulation de rouleau (46) et l'au moins un élément de manipulation (40) du premier élément de palier (8) du rouleau porteur (2) à démonter, une liaison par conjugaison de formes est établie et le dispositif de manipulation de rouleau porteur (15, 15') est ensuite éloigné du four à rouleaux (1) de sorte qu'ainsi, le rouleau porteur (2) à démonter est retiré du four à rouleaux (1).

18. Procédé selon la revendication 17, **caractérisé en ce que**, lors de la mise en prise de l'élément de manipulation (40) et du deuxième élément de manipulation de rouleau (46), la première extrémité longitudinale (12) entraînée du rouleau porteur (2) à démonter est pressée verticalement vers le bas par le premier élément de manipulation de rouleau (45) jusqu'à ce que la deuxième extrémité longitudinale (13) du rouleau porteur à démonter (2) est seulement encore guidée sans force par le deuxième élément de palier (10).

19. Procédé selon la revendication 17 ou 18, **caractérisé en ce que** le rouleau porteur (2) retiré du four à rouleaux (1) est emporté par le dispositif de manipulation de rouleau porteur (15') et le dispositif de manipulation de rouleau porteur (15') est équipé avec un rouleau porteur (2) à monter, dans lequel, lors de l'équipement, une liaison par conjugaison de formes est établie entre le deuxième élément de manipulation de rouleau (46) et l'au moins un élément de manipulation (40) du premier élément de palier (8) du rouleau porteur (2) à monter, et la première extrémité longitudinale (12) du rouleau porteur (2) à monter est pressée vers le bas par le premier élément de manipulation de rouleau (45), dans lequel le dispositif de manipulation de rouleau porteur (15) est ensuite de nouveau déplacé vers le four à rouleaux (1) et le rouleau porteur (2) à monter est ce faisant introduit dans le four à rouleaux (1).

20. Procédé selon la revendication 17 ou 18, **caractérisé en ce que** le dispositif de manipulation de rouleau porteur (15),lequel a retiré le rouleau porteur (2) à démonter du four à rouleaux (1), est déplacé latéralement vers le four à rouleaux (1) et un autre dispositif de manipulation de rouleau porteur (15"), lequel est équipé d'un rouleau porteur (2) à monter, est rapproché latéralement du four à rouleaux (1) vers la position du rouleau porteur (2) à monter, dans lequel, lors de l'équipement, une liaison par conjugaison de formes est établie entre le deuxième élément de manipulation de rouleau (46) et l'au moins un élément de manipulation (40) du premier élément de palier (8) du rouleau porteur (2) à monter, et la première extrémité longitudinale (12) du rouleau porteur (2) à monter est pressée vers le bas par le premier élément de manipulation de rouleau (45).

21. Procédé selon l'une des revendications 17 à 20, **caractérisé en ce qu'**avant de retirer du four à rouleaux (1) le rouleau porteur (2) à démonter, le four à rouleaux (1) est rincé avec de l'azote et/ou la température à l'intérieur du four à rouleaux (1) est abaissée à moins 850°C, de préférence 800°C.

22. Procédé selon la revendication 21, **caractérisé en ce que** le dispositif de manipulation de rouleau porteur (15) est déplacé dans un logement (16) rendu étanche par rapport à l'environnement extérieur pour retirer le rouleau porteur (2) à démonter du four à rouleaux (1), dans lequel, avant le retrait du rouleau porteur (2) à démonter du four à rouleaux (1), un sas (17) du logement (16) est amarré de manière étanche aux gaz à une ouverture de passage (20) du four à rouleaux (1) et l'intérieur du logement (16) est ensuite rincé avec de l'azote.
